# EUROPÄISCHE PATENTANMELDUNG

(11) **EP 3 474 205 A1**
(43) Veröffentlichungstag der Anmeldung: **24.04.2019**
(21) Anmeldenummer: 18199897.2
(22) Anmeldetag: 11.10.2018
(51) Int. Cl.: G06Q 10/08

(54) **ENERGIEEFFIZIENTE AUSLIEFERUNG VON SENDUNGEN**

(30) Priorität: 18.10.2017 DE 102017124340
(71) Anmelder: Deutsche Post AG, 53113 Bonn (DE)
(72) Erfinder: Radetzki, Uwe, Dr., 53127 Bonn (DE); Drees, Sandra, 53639 Königswinter (DE); Bischoff, Heike, 51143 Köln (DE); Trendafilov, Boris, 53757 Sankt Augustin (DE); Kong, Dong Uck, 53127 Bonn (DE)
(74) Vertreter: Cohausz & Florack

(57) **Zusammenfassung**

Es wird unter anderem offenbart, ein Verfahren ausgeführt durch eine Vorrichtung oder ein System, wobei das Verfahren umfasst:
- Erhalten und/oder Bereithalten (101) von historischen Auslieferungsinformationen, wobei die historischen Auslieferungsinformationen mit mehreren durch ein oder verschiedene Fahrzeuge ausgeführten Auslieferungen von Sendungen assoziiert sind, und wobei die historischen Auslieferungsinformationen für jede der mit den Auslieferungsinformationen assoziierten Auslieferungen von Sendungen zumindest Angaben zu einer Auslieferungsroute, zu einem Energiebedarf und zu einer Fahrzeugkonfiguration repräsentieren,
- Erhalten (102) von Sendungsauslieferungsinformationen für mehrere auszuliefernde Sendungen, wobei die Sendungsauslieferungsinformationen zumindest für jede der Sendungen eine Angabe zur Auslieferungsposition für die Auslieferung der jeweiligen Sendung repräsentieren,
- Bestimmen (103) einer Auslieferungsroute zum Ausliefern der Sendungen und einer Fahrzeugkonfiguration für ein Fahrzeug zum Ausliefern der Sendungen entlang der bestimmten Auslieferungsroute zumindest teilweise basierend auf den Sendungsauslieferungsinformationen und den historischen Auslieferungsinformationen, wobei das Bestimmen der Auslieferungsroute und der Fahrzeugkonfiguration das Bestimmen des erwarteten Energiebedarfs für die Auslieferung der Sendungen entlang der bestimmten Auslieferungsroute durch ein Fahrzeug mit der bestimmten Fahrzeugkonfiguration umfasst,
- Bereitstellen (104) von Auslieferungssteuerinformationen, um ein Ausliefern der Sendungen entlang der bestimmten Auslieferungsroute durch ein Fahrzeug mit der bestimmten Fahrzeugkonfiguration zu veranlassen.

## Beschreibung

### Gebiet

Beispielhafte Ausführungsformen der Erfindung betreffen die energieeffiziente Auslieferung von Sendungen.

### Hintergrund

Im Stand der Technik sind Verfahren zur Routenplanung für eine Auslieferung von Sendungen bekannt. Diese Routenplanungen basieren beispielsweise auf einem Routenplanungsalgorithmus wie einem Algorithmus zur Lösung des sogenannten Problems des Handlungsreisenden. Dabei können bei der Routenplanung bestimmte vorgegebene Routenkriterien wie "energieeffiziente" Route berücksichtigt werden. Allerdings ist die Energieeffizienz einer als Ergebnis einer solchen Routenplanung für eine "energieeffiziente" Route erhaltenen Auslieferungsroute häufig unbefriedigend.

### Zusammenfassung einiger beispielhafter Ausführungsformen der Erfindung

Die vorliegende Erfindung hat sich daher unter anderem die Aufgabe gestellt, die im Stand der Technik bekannten Verfahren zur Routenplanung zu verbessern und ein Verfahren, eine Vorrichtung, ein System und ein Computerprogramm bereitzustellen, die eine energieeffizientere Auslieferung von Sendungen ermöglichen.

Gemäß einem beispielhaften Aspekt der Erfindung wird ein Verfahren ausgeführt durch eine Vorrichtung oder ein System offenbart, wobei das Verfahren die folgenden Schritte umfasst:
- Erhalten und/oder Bereithalten von historischen Auslieferungsinformationen, wobei die historischen Auslieferungsinformationen mit mehreren durch ein oder verschiedene Fahrzeuge ausgeführten Auslieferungen von Sendungen assoziiert sind, und wobei die historischen Auslieferungsinformationen für jede der mit den Auslieferungsinformationen assoziierten Auslieferungen von Sendungen zumindest Angaben zu einer Auslieferungsroute, zu einem Energiebedarf und zu einer Fahrzeugkonfiguration repräsentieren,
- Erhalten von Sendungsauslieferungsinformationen für mehrere auszuliefernde Sendungen, wobei die Sendungsauslieferungsinformationen zumindest für jede der Sendungen eine Angabe zur Auslieferungsposition für die Auslieferung der jeweiligen Sendung repräsentieren,
- Bestimmen einer Auslieferungsroute zum Ausliefern der Sendungen und einer Fahrzeugkonfiguration für ein Fahrzeug zum Ausliefern der Sendungen entlang der bestimmten Auslieferungsroute zumindest teilweise basierend auf den Sendungsauslieferungsinformationen und den historischen Auslieferungsinformationen, wobei das Bestimmen der Auslieferungsroute und der Fahrzeugkonfiguration das Bestimmen des erwarteten Energiebedarfs für die Auslieferung der Sendungen entlang der bestimmten Auslieferungsroute durch ein Fahrzeug mit der bestimmten Fahrzeugkonfiguration umfasst,
- Bereitstellen von Auslieferungssteuerinformationen, um ein Ausliefern der Sendungen entlang der bestimmten Auslieferungsroute durch ein Fahrzeug mit der bestimmten Fahrzeugkonfiguration zu veranlassen.

Die Vorrichtung und/oder das System entsprechen beispielsweise der im Folgenden offenbarten Vorrichtung und/oder dem im Folgenden offenbarten System.

Gemäß einem weiteren beispielhaften Aspekt der Erfindung wird ferner eine Vorrichtung oder ein System offenbart, wobei die Vorrichtung oder das System Mittel eingerichtet zur Ausführung des offenbarten Verfahrens oder jeweilige Mittel zur Ausführung der Schritte des offenbarten Verfahrens umfasst.

Dabei können verschiedene Schritte zumindest teilweise von verschiedenen Mitteln (z.B. Komponenten) und/oder zumindest teilweise von den gleichen Mitteln (z.B. Komponenten) ausgeführt werden.

Zum Beispiel ist die offenbarte Vorrichtung eine Vorrichtung eines Auslieferungsdienstes (z.B. eine (z.B. zentrale) Vorrichtung zum zumindest teilweise Steuern von durch Fahrzeuge des Auslieferungsdienstes auszuführende Auslieferungen und/oder Auslieferungsaufträgen des Auslieferungsdienstes) und/oder das offenbarte System ein System eines Auslieferungsdienstes (z.B. ein System zum zumindest teilweise Steuern von durch Fahrzeuge des Auslieferungsdienstes auszuführende Auslieferungen und/oder Auslieferungsaufträgen des Auslieferungsdienstes). Ein Auslieferungsdienst ist beispielsweise ein Post und/oder Paketdienst.

Die offenbarte Vorrichtung ist beispielsweise eine Servervorrichtung (z.B. eine (z.B. zentrale) Servervorrichtung eines Auslieferungsdienstes zum zumindest teilweise Steuern von durch Fahrzeuge des Auslieferungsdienstes auszuführende Auslieferungen und/oder Auslieferungsaufträgen des Auslieferungsdienstes). Alternativ kann die offenbarte Vorrichtung beispielsweise auch Teil eines Fahrzeugs sein, zum Beispiel kann die offenbarte Vorrichtung eine Steuervorrichtung und/oder Teil einer Steuervorrichtung eines Fahrzeugs (z.B. eines Fahrzeugs eines Auslieferungsdienstes) sein.

Das offenbarte System umfasst beispielsweise verschiedene Vorrichtungen, wobei jede der Vorrichtungen ein oder mehrere der Mittel umfasst. Die verschiedenen Vorrichtungen können beispielsweise verschiedene Servervorrichtungen einer Servercloud (z.B. einer (z.B. zentralen) Servercloud eines Auslieferungsdienstes zum zumindest teilweise Steuern von durch Fahrzeuge des Auslieferungsdienstes auszuführende Auslieferungen und/oder Auslieferungsaufträgen des Auslieferungsdienstes) sein. Alternativ kann das System auch nur eine Vorrichtung (z.B. die offenbarte Vorrichtung) umfassen.

Die Mittel einer Vorrichtung (z.B. der offenbarten Vorrichtung) und/oder eines Systems (z.B. des offenbarten Systems) können Hardware- und/oder Softwarekomponenten umfassen. Die Mittel können beispielsweise mindestens einen Speicher mit Programmanweisungen eines Computerprogramms (z.B. des im Folgenden offenbarten Computerprogramms) und mindestens einen Prozessor ausgebildet zum Ausführen von Programmanweisungen aus dem mindestens einen Speicher umfassen. Dementsprechend soll gemäß der Erfindung auch eine Vorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, eine Vorrichtung zu veranlassen, ein offenbartes Verfahren auszuführen und/oder zu steuern.

Zum Beispiel umfasst die offenbarte Vorrichtung oder das offenbarte System Kommunikationsmittel. Diese Kommunikationsmittel sind beispielsweise eingerichtet, mit einer (z.B. entfernten) Vorrichtung mittelbar (z.B. über weitere Kommunikationsmittel) und/oder unmittelbar zu kommunizieren und Informationen (z.B. die Sendungsauslieferungsinformationen und/oder die Auslieferungssteuerungsinformationen) zu senden und/oder zu empfangen.

Alternativ oder zusätzlich können die Mittel der Vorrichtung oder des Systems eine oder mehrere Erfassungsmittel umfassen. Es versteht sich, dass die Vorrichtung oder das System auch andere nicht aufgeführte Mittel (z.B. Komponenten) umfassen kann.

Gemäß einem weiteren beispielhaften Aspekt der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung oder ein System (z.B. die offenbarte Vorrichtung oder das offenbarte System) zu veranlassen, das offenbarte Verfahren auszuführen.

Das offenbarte Computerprogramm kann beispielsweise über ein Netzwerk wie das Internet, ein Telefon- oder Mobilfunknetz und/oder ein lokales Netzwerk verteilbar sein. Das offenbarte Computerprogramm kann zumindest teilweise Software und/oder Firmware eines Prozessors sein. Es kann gleichermaßen zumindest teilweise als Hardware implementiert sein. Das offenbarte Computerprogramm kann beispielsweise auf einem computerlesbaren Speichermedium gespeichert sein, z.B. einem berührbaren, magnetischen, elektrischen, elektromagnetischen, optischen und/oder andersartigen Speichermedium. Das Speichermedium kann beispielsweise Teil eines Prozessors sein, beispielsweise ein (nicht-flüchtiger oder flüchtiger) Programmspeicher und/oder Hauptspeicher eines Prozessors oder ein Teil davon.

Das offenbarte Verfahren, die offenbarte Vorrichtung, das offenbarte Systems und das offenbarte Computerprogramm sind beispielsweise für die energieeffiziente Steuerung einer Auslieferung von Sendungen.

Im Folgenden werden die Eigenschaften des offenbarten Verfahrens, der offenbarten Vorrichtung, des offenbarten Systems und des offenbarten Computerprogramms - teilweise beispielhaft - beschrieben.

Eine Sendung ist beispielsweise ein Packstück, ein Stückgut, eine Paketsendung und/oder eine Briefsendung. Es versteht sich, dass eine Sendung eine Flüssigkeit, ein Gas oder ein Schüttgut umfassen oder dadurch gebildet sein kann.

Unter einer Auslieferung einer Sendung soll vorliegend beispielsweise der Transport der Sendung durch ein Fahrzeug entlang einer Auslieferungsroute zu einer Auslieferungsposition für die Auslieferung der Sendung verstanden werden. Daher soll unter der Auslieferung von Sendungen (d.h. mehreren Sendungen) vorliegend beispielsweise der Transport jeder der Sendungen durch ein Fahrzeug entlang einer Auslieferungsoute zu einer jeweiligen Auslieferungsposition für die Auslieferung der jeweiligen Sendung verstanden werden. Dementsprechend bewegt sich ein Fahrzeug, das eine solche Auslieferung von Sendungen durchführt, entlang der Auslieferungsroute. An der jeweiligen Auslieferungsposition wird die jeweilige Sendung beispielsweise durch das Fahrzeug oder einen Zusteller zur Abholung und/oder zum Empfang durch den Empfänger der Sendung bereitgestellt (z.B. in einem Aufnahmefach einer Aufnahmevorrichtung wie einem Brief- und/oder Paketkasten abgelegt).

Ein Fahrzeug, das eine solche Auslieferung von Sendungen ausführt, ist beispielsweise ein entsprechend eingerichtetes autonomes und/oder teilautonomes Landfahrzeug (z.B. ein Fahrrad, ein Dreirad, ein Pedelec, ein Personenkraftwagen, ein Lastkraftwagen, ein Schienenfahrzeug wie eine Lokomotive, ein unbemanntes Landfahrzeug und/oder ein Roboter), Wasserfahrzeug (z.B. ein Schiff wie ein Frachtschiff, ein U-Boot und/oder ein unbemanntes Wasserfahrzeug) und/oder Luftfahrzeug (z.B. ein Flugzeug, ein Hubschrauber, ein unbemanntes Luftfahrzeug wie eine Flugdrohne). Unter einem autonomen und/oder teilautonomen Fahrzeug soll beispielsweise ein Fahrzeug verstanden werden, das eingerichtet ist, sich autonom und/oder zumindest teilweise autonom zu bewegen. Ein Fahrzeug soll beispielsweise als sich zumindest teilweise autonom bewegend verstanden werden, wenn sich das Fahrzeug zumindest auf einem Abschnitt einer vorgegebenen Route (z.B. einer Auslieferungsroute) selbsttätig (z.B. ohne Einfluss eines Fahrzeugführers) bewegt (z.B. fährt und/oder fliegt und/oder schwimmt) und entlang der vorgegebenen Route navigiert. Ein sich autonom bewegendes Fahrzeug bewegt sich beispielsweise auf der gesamten Route selbsttätig (z.B. ohne Einfluss eines Fahrzeugführers) und navigiert selbsttätig entlang der gesamten Route. Dabei kann sich ein zumindest teilweise autonom bewegendes Fahrzeug unabhängig von einem Benutzer oder anderen Vorrichtungen (z.B. einer oder mehreren Servervorricthungen) entlang der vorgegebenen Route bewegen und/oder navigieren, oder ein zumindest teilweise autonom bewegendes Fahrzeug kann sich zumindest teilweise abhängig von einem Benutzer oder anderen Vorrichtungen entlang der vorgegebenen Route bewegen und/oder navigieren, z.B. kann es Informationen (z.B. Navigationsinformationen und/oder Steuerinformationen zum Bewegen und/oder Navigieren entlang der vorgegebenen Route) erhalten (z.B. von dem Benutzer durch eine entsprechende Benutzereingabe oder den andere Vorrichtungen). Ein solches teilautonomes und/oder autonomes Fahrzeug ist beispielsweise ein unbemanntes Fahrzeug.

Dabei soll unter einer Route wie einer Auslieferungsroute beispielsweise eine Wegbeschreibung eines Wegs zwischen mehreren Positionen (z.B. Auslieferungspositionen) verstanden werden. Der Weg entspricht meist nicht der Luft- oder Sichtlinie zwischen diesen Positionen, sondern verläuft zum Beispiel entlang von Verkehrswegen wie Landverkehrswegen (z.B. Straßen, Fußwegen, Schienenwegen), Wasserverkehrswegen (z.B. Wasserstraßen wie schiffbare Flüsse und Kanäle) und/oder Luftverkehrswegen (z.B. Luftstraßen). Eine Route kann beispielsweise durch eine geordnete Liste von Wegpunktangaben repräsentiert werden, wobei jede Wegpunktangabe eine Position eines Wegpunkts eines Wegs repräsentiert, an der sich beispielsweise die Richtung des Wegs ändert.

Dass die historischen Auslieferungsinformationen mit mehreren durch ein oder verschiedene Fahrzeugen ausgeführten Auslieferungen (d.h. in der Vergangenheit ausgeführten Auslieferungen) von Sendungen assoziiert ist, soll beispielsweise derart verstanden werden, dass die historischen Auslieferungsinformationen für jede der mit den Auslieferungsinformationen assoziierten Auslieferungen von Sendungen eine oder mehrere für die jeweilige Auslieferung von Sendungen charakteristische Angaben repräsentieren. Eine solche für eine Auslieferung von Sendungen charakteristische Angabe repräsentiert beispielsweise einen von dem jeweiligen Fahrzeug, das die jeweilige Auslieferung ausgeführt hat, während der jeweiligen Auslieferung erfassbaren (z.B. erfassten) und/oder bestimmbaren (z.B. bestimmten) Parameter wie den Energiebedarf des jeweiligen Fahrzeugs. Dabei soll unter einem Energiebedarf beispielsweise ein absoluter Energiebedarf (z.B. ein Energiebedarf in Kilowattstunde), ein absoluter Kraftstoffbedarf (z.B. ein Benzin- oder Dieselbedarf in Liter), ein normierter Energiebedarf (z.B. eine Leistung in Kilowatt (d.h. ein Energiebedarf pro Zeiteinheit) oder ein Energiebedarf pro Streckeneinheit (z.B. Kilometer) oder pro Sendung) und/oder ein normierter Kraftstoffbedarf (z.B. ein Benzin- oder Dieselbedarf in Liter pro Zeiteinheit (z.B. Minute oder Stunde) oder pro Streckeneinheit (z.B. Kilometer) oder pro Sendung), der von dem jeweiligen Fahrzeug während der jeweiligen Auslieferung erfasst und/oder bestimmt wurde, verstanden werden. Die historischen Auslieferungsinformationen können, wie unten offenbart, beispielsweise zum Trainieren eines wissensbasierten und/oder selbstlernenden Systems verwendet werden.

Es versteht sich, dass die Erfindung nicht auf den Energiebedarf des jeweiligen Fahrzeugs als Parameter beschränkt ist. Weitere Beispiele für einen von dem jeweiligen Fahrzeug (das die jeweilige Auslieferung ausgeführt hat) während der jeweiligen Auslieferung erfassbaren (z.B. erfassten) und/oder bestimmbaren (z.B. bestimmten) Parameter sind eine Fahrzeuggeschwindigkeit auf der Auslieferungsroute und/oder auf einem Abschnitt der Auslieferungsroute, eine Beschaffenheit der jeweiligen Auslieferungsroute und/oder eines Abschnitt der jeweiligen Auslieferungsroute und/oder ein Zeitverlauf der jeweilige Auslieferung.

Informationen sollen vorliegend auch als Offenbarung von entsprechenden Informationen in codierter Form (z.B. in Form von Daten und/oder in Form eines Signals) verstanden werden.

Eine Angabe soll beispielsweise als durch Informationen repräsentiert verstanden werden, wenn die Informationen eine Repräsentation der Angabe enthalten.

Neben Angaben zu einem Energiebedarf repräsentieren die historischen Auslieferungsinformationen für jede der mit den Auslieferungsinformationen assoziierten Auslieferungen von Sendungen zumindest Angaben zu einer Auslieferungsroute und zu einer Fahrzeugkonfiguration. Dementsprechend können die historischen Auslieferungsinformationen für jede der mit den Auslieferungsinformationen assoziierten Auslieferungen von Sendungen zusätzlich zu einem von dem jeweiligen Fahrzeug, das die jeweilige Auslieferung ausgeführt hat, während der jeweiligen Auslieferung erfassbaren (z.B. erfassten) und/oder bestimmbaren (z.B. bestimmten) Energiebedarf des jeweiligen Fahrzeugs Angaben zu der Auslieferungsroute entlang der sich das jeweilige Fahrzeug, das die Auslieferung ausgeführt hat, während der Auslieferung bewegt hat und Angaben zu der Fahrzeugkonfiguration des jeweiligen Fahrzeugs, das die jeweilige Auslieferung ausgeführt hat, repräsentieren.

Dabei soll unter Angaben zu einer Auslieferungsroute eine Repräsentation der Auslieferungsroute (z.B. eine geordnete Liste von Wegpunktangaben) verstanden werden. Angaben zu einer Fahrzeugkonfiguration repräsentieren beispielsweise eine oder mehrere für ein Fahrzeug charakteristische Parameter wie einen Fahrzeugtyp, eine Fahrzeugmotorisierung, eine Fahrzeugbereifung und/oder einen Fahrzeugaufbau. Es versteht sich, dass die Erfindung nicht auf diese für ein Fahrzeug charakteristischen Parameter beschränkt ist. Falls es sich um ein modulares Fahrzeug handelt, kann eine Fahrzeugkonfiguration beispielsweise ein oder mehrere Module repräsentieren und/oder spezifizieren, mit denen das Fahrzeug ausgestattet war und/oder sein soll.

Unter dem Erhalten von Informationen soll vorliegend beispielsweise verstanden werden, dass diese Informationen (z.B. in Form eines Signals) durch Kommunikationsmittel empfangen und/oder durch Erfassungsmittel erfasst werden. Informationen sollen vorliegend beispielsweise als bereitgehalten verstanden werden, wenn diese Informationen in einem Speicher (z.B. in Form von Daten) gespeichert sind oder eine Repräsentation dieser Informationen in einem Speicher gespeichert ist.

Zum Beispiel werden mit einer Auslieferung von Sendungen assoziierte historische Auslieferungsinformationen von dem Fahrzeug, das die Auslieferung ausgeführt hat, empfangen (z.B. durch Kommunikationsmittel der offenbarten Vorrichtung und/oder des offenbarten Systems) und anschließend (zusammen mit anderen historischen Auslieferungsinformationen) in einem Speicher (z.B. einem Speicher der offenbarten Vorrichtung und/oder des offenbarten Systems) gespeichert.

Die mehreren auszuliefernden Sendungen, für die Sendungsauslieferinformationen erhalten werden, sollen beispielsweise innerhalb einer Auslieferung und/oder durch ein Fahrzeug (z.B. im Rahmen eines Auslieferungsauftrags) ausgeliefert werden. Dass die Sendungsauslieferungsinformationen zumindest für jede der Sendungen eine Angabe zur Auslieferungsposition für die Auslieferung der jeweiligen Sendung repräsentieren, soll beispielsweise derart verstanden werden, dass die Sendungsauslieferungsinformationen eine Repräsentation der Auslieferungsposition für die Auslieferung der jeweiligen Sendung enthält. Beispiele für eine Repräsentation einer Position (z.B. einer Auslieferungsposition) sind Adress-, Positions- und/oder Koordinatenangabe. Eine Adressangabe ist beispielsweise eine Repräsentation einer Postanschrift (z.B. einer Postanschrift eines Empfängers einer Sendung). Eine Koordinatenangabe ist beispielsweise eine Repräsentation von Koordinaten einer Position wie einer Auslieferungsposition (z.B. Koordinaten einer Position gemäß einem Satelliten gestützten Navigationssystem und/oder einem geographischen Koordinatensystem wie dem UTM (Universal Transverse Mercator) Koordinatensystem auf Basis des geodätischen Referenzsystem WGS84 (World Geodetic System 1984)).

Dass das Bestimmen der Auslieferungsroute und/oder der Fahrzeugkonfiguration zumindest teilweise auf den Sendungsauslieferungsinformationen basiert, soll beispielsweise derart verstanden werden, dass die Auslieferungsroute und die Fahrzeugkonfiguration derart bestimmt werden, dass die bestimmte Auslieferungsroute einen Weg beschreibt, entlang dem sich ein Fahrzeug mit der bestimmten Fahrzeugkonfiguration nacheinander zu den durch die Sendungsauslieferungsinformationen repräsentierten Auslieferungspositionen bewegen kann. Zum Beispiel beschreibt die bestimmte Auslieferungsroute einen Weg von einer Abholposition, an der die Sendungen durch das Fahrzeug abgeholt werden können, zu den durch die Sendungsauslieferungsinformationen repräsentierten Auslieferungspositionen. Die bestimmte Fahrzeugkonfiguration repräsentiert beispielsweise charakteristische Parameter (z.B. einen Fahrzeugtyp, eine Fahrzeugmotorisierung, eine Fahrzeugbereifung und/oder einen Fahrzeugaufbau) eines Fahrzeugs, das geeignet ist, sich entlang der bestimmten Auslieferungsroute zu bewegen. Zum Beispiel wird zunächst die Auslieferungsroute und anschließend eine für die Auslieferungsroute geeignete Fahrzeugkonfiguration bestimmt. Dabei kann das Bestimmen der Auslieferungsroute zumindest teilweise auf den Sendungsauslieferungsinformationen basieren. Das Bestimmen der Fahrzeugkonfiguration erfolgt anschließend beispielsweise zumindest teilweise basierend auf der bestimmten Auslieferungsroute.

Es versteht sich, dass es eine Vielzahl von möglichen Auslieferungsrouten geben kann, die verschiedene mögliche Wege, entlang derer sich ein Fahrzeug nacheinander zu den durch die Sendungsauslieferungsinformationen repräsentierten Auslieferungspositionen bewegen kann, beschreiben. Dementsprechend kann das Bestimmen der Auslieferungsroute das Auswählen der Auslieferungsroute aus der Vielzahl von möglichen Auslieferungsrouten umfassen.

Ferner kann das Bestimmen der Auslieferungsroute (z.B. der Vielzahl von möglichen Auslieferungsrouten) zumindest teilweise basierend auf Navigationskarteninformationen erfolgen. Unter Navigationskarteninformationen sollen beispielsweise Navigations- und/oder Kartendaten verstanden werden, die eine Karte (z.B. Verkehrswegekarte wie eine Autostraßenkarte, eine Schiffstraßenkarte und/oder Luftstrassenkarte) zum Bestimmen einer Route (z.B. einer Auslieferungsroute) repräsentieren. Unter einer Karte soll beispielsweise ein zweidimensionales, dreidimensionales oder mehrdimensionales (z.B. mit der Zeit als vierte Dimension) Modell eines Bereichs (z.B. eines geographischen Bereichs wie eines Bereichs auf und/oder oberhalb der Erdoberfläche) sein. Eine Karte kann beispielsweise eine auf dem Markt erhältliche Karte sein, oder eine aus Sensorinformationen eines oder mehrerer autonomer und/oder teilautonomer Fahrzeuge generierte Karte sein. Kartendaten einer solchen Karte können je nach Abstraktionsebene geometrische Informationen (z.B. als Punktwolke und/oder Octomap, vgl. den Artikel: Hornung, Armin, et al. "OctoMap: An efficient probabilistic 3D mapping framework based on octrees." Autonomous Robots 34.3 (2013): 189-206), semantische Informationen, symbolische Informationen, Umgebungsmerkmale, Landmarken, vom Nutzer eingegebene Texte, Fotos, Änderungsinformationen über einen bestimmten Zeitraum und viele andere zusätzliche Informationen zur Repräsentation der Karte enthalten.

Das Bestimmen des erwarteten Energiebedarfs für die Auslieferung der Sendungen entlang der bestimmten Auslieferungsroute durch ein Fahrzeug mit der bestimmten Fahrzeugkonfiguration kann beispielsweise durch das Simulieren des erwarteten Energiebedarfs für die Auslieferung der Sendungen entlang der bestimmten Auslieferungsroute durch ein Fahrzeug mit der bestimmten Fahrzeugkonfiguration erfolgen. Dabei kann das Simulieren zumindest teilweise auf den historischen Auslieferungsinformationen basieren. Unter dem erwarteten Energiebedarf für die Auslieferung der Sendungen entlang der bestimmten Auslieferungsroute durch ein Fahrzeug mit der bestimmten Fahrzeugkonfiguration soll der Energiebedarf verstanden werden, der für ein Fahrzeug mit der bestimmten Fahrzeugkonfiguration erwartet wird, wenn sich dieses Fahrzeug zum Ausliefern der Sendungen entlang der Auslieferungsroute bewegt.

Dadurch, dass der erwartete Energiebedarf für die Auslieferung der Sendungen sowohl die bestimmte Auslieferungsroute als auch die Fahrzeugkonfiguration berücksichtigt, kann eine besonders gute Annäherung des erwarteten Energiebedarfs an den tatsächlichen Energiebedarf erreicht werden. Durch das Bestimmen des erwarteten Energiebedarfs beim Bestimmen der Auslieferungsroute und der Fahrzeugkonfiguration kann somit erreicht werden, dass die Kombination der bestimmten Auslieferungsroute und der bestimmten Fahrzeugkonfiguration zu einer möglichst energieeffizienten Auslieferung führen. Dies stellt eine deutliche Verbesserung gegenüber aus dem Stand der Technik bekannten Verfahren zur Routenplanung dar, bei denen die Fahrzeugkonfiguration des die Auslieferung ausführenden Fahrzeugs nicht berücksichtigt und für die Auslieferung nicht vorgegeben wird.

Die bereitgestellten Auslieferungssteuerungsinformationen umfassen beispielsweise eine Repräsentation der bestimmten Fahrzeugkonfiguration und/oder der bestimmten Auslieferungsroute, um das Ausliefern der Sendungen entlang der bestimmten Auslieferungsroute durch ein Fahrzeug mit der bestimmten Fahrzeugkonfiguration zu veranlassen. Dadurch kann erreicht werden, dass die Auslieferung auch tatsächlich durch ein Fahrzeug mit dieser Fahrzeugkonfiguration und entlang dieser Auslieferungsroute und somit möglichst energieeffizient erfolgt. Zum Beispiel werden die Auslieferungssteuerungsinformationen bereitgestellt, indem sie zum Abruf durch einen Benutzer (z.B. einen Disponenten) und/oder eine entfernte Vorrichtung (z.B. eine Vorrichtung zum Auswählen und/oder Konfigurieren von Fahrzeugen) und/oder ein Fahrzeug bereitgestellt und/oder an einen Benutzer und/oder eine entfernte Vorrichtung und/oder ein Fahrzeug gesendet werden. Ferner können die Auslieferungssteuerungsinformationen beispielsweise durch das Ausgeben an einen Benutzer bereitgestellt werden.

Das Veranlassen des Auslieferns der Sendungen entlang der bestimmten Auslieferungsroute durch ein Fahrzeug mit der bestimmten Fahrzeugkonfiguration umfasst beispielsweise das Auswählen eines Fahrzeugs mit der bestimmten Fahrzeugkonfiguration oder, wenn kein Fahrzeug mit der bestimmten Fahrzeugkonfiguration verfügbar ist, das (Um-)Konfigurieren eines Fahrzeugs entsprechend der bestimmten Fahrzeugkonfiguration. Das (Um-)Konfigurieren kann beispielsweise durch den Austausch von Modulen erfolgen, wenn das Fahrzeug modular ist und die bestimmte Fahrzeugkonfiguration ein oder mehrere Module repräsentiert und/oder spezifiziert, mit denen das Fahrzeug ausgestattet sein soll.

Ferner kann das Veranlassen des Auslieferns der Sendungen entlang der bestimmten Auslieferungsroute durch ein Fahrzeug mit der bestimmten Fahrzeugkonfiguration das Ansteuern des ausgewählten und/oder (um-) konfigurierten Fahrzeugs derart, dass das Fahrzeug veranlasst wird, sich zum Ausliefern der Sendungen entlang der bestimmten Auslieferungsroute zu bewegen, umfassen. Zu diesem Zweck kann die bestimmte Auslieferungsroute beispielsweise in eine Navigationseinheit des Fahrzeugs einprogrammiert werden.

Weitere Vorteile der offenbarten Erfindung werden nachfolgend anhand beispielhafter Ausführungsformen des offenbarten Verfahrens, der offenbarten Vorrichtung, des offenbarten Systems und des offenbarten Computerprogramms beschrieben.

In einer beispielhaften Ausführungsform der Erfindung umfasst das Bestimmen der Auslieferungsroute und der Fahrzeugkonfiguration die folgenden Schritte:
- Bestimmen einer möglichen Auslieferungsroute (z.B. einer ersten möglichen Auslieferungsroute) zum Ausliefern der Sendungen (z.B. zumindest teilweise basierend auf den Sendungsauslieferungsinformationen),
- Bestimmen einer möglichen Fahrzeugkonfiguration (z.B. einer ersten möglichen Fahrzeugkonfiguration) eines Fahrzeugs zum Ausliefern der Sendungen entlang der möglichen Auslieferungsroute (z.B. zumindest teilweise basierend auf der möglichen Auslieferungsroute und/oder den historischen Auslieferungsinformationen),
- Bestimmen des erwarteten Energiebedarfs für die Auslieferung der Sendungen entlang der möglichen Auslieferungsroute durch ein Fahrzeug mit der möglichen Fahrzeugkonfiguration (z.B. zumindest teilweise basierend auf der möglichen Fahrzeugkonfiguration, der möglichen Auslieferungsroute und/oder den historischen Auslieferungsinformationen).

Die mögliche Auslieferungsroute wird beispielsweise derart zumindest teilweise basierend auf den Sendungsauslieferungsinformationen bestimmt, dass sie einen Weg beschreibt, entlang dem sich ein Fahrzeug nacheinander zu den durch die Sendungsauslieferungsinformationen repräsentierten Auslieferungspositionen bewegen kann. Ferner kann das Bestimmen der möglichen Auslieferungsroute auf Navigationskarteninformationen erfolgen. Die mögliche Auslieferungsroute wird beispielsweise gemäß Vorgaben zum Bestimmen der Auslieferungsroute wie einem vorgegebenen Routenplanungsalgorithmus und/oder einem oder mehreren vorgegebenen Routenkriterien wie beispielsweise "kürzeste Route" oder "schnellste Route" oder "energieeffizienteste Route" und/oder einer vorgegebenen Reihenfolge der durch die Sendungsauslieferungsinformationen repräsentierten Auslieferungspositionen bestimmt. Es versteht sich, dass das Bestimmen der möglichen Auslieferungsroute in einigen Ausführungsformen neben diesen Vorgaben und/oder den Sendungsauslieferungsinformationen zumindest teilweise auch auf anderen Informationen wie beispielsweise Verkehrsinformationen (z.B. Angaben zu Verkehrsverzögerungen wie Staus und/oder Unfällen und/oder Baustellen und/oder Sperrungen) basieren kann. Solche Routenplanungsalgorithmen sind beispielsweise im Stand der Technik bekannte Algorithmen (z.B. heuristische Algorithmen) zur Lösung des sogenannten Problems des Handlungsreisenden.

Anschließend kann beispielsweise die mögliche Fahrzeugkonfiguration eines Fahrzeugs zum Ausliefern der Sendungen entlang der möglichen Auslieferungsroute (d.h. der zuvor bestimmten möglichen Auslieferungsroute) zumindest teilweise basierend auf der Auslieferungsroute bestimmt werden. Zum Beispiel wird die mögliche Fahrzeugkonfiguration derart bestimmt, dass erwartet wird, dass ein Fahrzeug mit der möglichen Fahrzeugkonfiguration sich entlang der möglichen Auslieferungsroute energieeffizient bewegt. Die mögliche Fahrzeugkonfiguration wird beispielsweise gemäß einem vorgegebenen Fahrzeugkonfigurationsalgorithmus bestimmt.

Ein solcher Fahrzeugkonfigurationsalgorithmus kann beispielsweise auf vorgegebenen Zuordnungen zwischen verschiedenen Eigenschaften möglicher Auslieferungsrouten und verschiedenen Fahrzeugkonfiguration basieren, die erfahrungsgemäß energieeffizient sind. In einem einfachen Beispiel kann vorgesehen sein, dass die Fahrzeugkonfiguration nur einen Fahrzeugtyp repräsentiert. In diesem einfachen Beispiel kann möglichen Auslieferungsrouten mit einer Länge von weniger als 5 km als Fahrzeugtyp beispielsweise ein "unbemanntes und autonomes elektrisch angetriebenes Landfahrzeug" (z.B. ein autonomer Roboter), Auslieferungsrouten mit einer Länge zwischen 5 km und 10 km als Fahrzeugtyp beispielsweise ein "unbemanntes und autonomes Luftfahrzeug" (z.B. eine Flugdrohne) und Auslieferungsrouten mit einer Länge von mehr als 10 km als Fahrzeugtyp beispielsweise ein "autonomes oder teilautonomes Landfahrzeug mit einem Verbrennungsmotor" (z.B. ein Personenkraftwagen oder ein Lastkraftwagen) zugeordnet sein, wenn die Verwendung solcher Fahrzeugtypen für Auslieferungsrouten mit diesen Längen sich in der Vergangenheit als besonders energieeffizient herausgestellt hat.

Alternativ oder zusätzlich kann ein solcher Fahrzeugkonfigurationsalgorithmus beispielsweise auf einem wissensbasierten System (z.B. einem Expertensystem) und/oder einem selbstlernenden System basieren. Ein solches wissensbasiertes System und/oder selbstlernendes System kann beispielsweise zumindest teilweise auf den historischen Auslieferungsinformationen basieren. Zum Beispiel kann ein solches wissensbasiertes System und/oder selbstlernendes System basierend auf den historischen Auslieferungsinformationen derart trainiert werden, dass es für eine bestimmte Auslieferungsroute eine Fahrzeugkonfiguration für ein Fahrzeug derart bestimmt, dass erwartet wird, dass ein Fahrzeug mit dieser Fahrzeugkonfiguration sich entlang dieser Auslieferungsroute möglichst energieeffizient bewegt und/oder dass der erwartete Energiebedarf für die Auslieferung der Sendungen entlang dieser Auslieferungsroute durch ein Fahrzeug mit dieser Fahrzeugkonfiguration möglichst gering ist. Es versteht sich, dass ein solches wissensbasiertes System und/oder selbstlernendes System nicht zwangsläufig die energieeffizienteste Fahrzeugkonfiguration und/oder die Fahrzeugkonfiguration mit dem geringsten erwarteten Energiebedarf bestimmt (z.B. weil die historischen Auslieferungsinformationen begrenzt sind und nur ein unvollständiges Training erlauben).

Ferner kann ein solches wissensbasiertes System und/oder selbstlernendes System basierend auf den historischen Auslieferungsinformationen derart trainiert werden, dass es für eine bestimmte Auslieferungsroute neben einer Fahrzeugkonfiguration auch einen erwarteten Energiebedarf für die Auslieferung der Sendungen entlang dieser Auslieferungsroute durch ein Fahrzeug mit dieser Fahrzeugkonfiguration bestimmt. Es versteht sich, dass der tatsächliche Energiebedarf von diesem erwarteten Energiebedarf abweichen kann (z.B. weil die historischen Auslieferungsinformationen begrenzt sind und nur ein unvollständiges Training erlauben). Durch dieses Training kann das wissensbasierte System und/oder selbstlernende System über einen längeren Zeitraum verbessert werden (d.h. die Prognosegüte wie z.B. die Qualität des durch das System abgebildeten Zusammenhangs zwischen einer oder mehreren Fahrzeugkonfigurationen und einem erwarteten Energieverbrauch verbessert werden) und beispielsweise Abweichungen des erwarteten Energiebedarfs vom tatsächlichen Energiebedarf im Vergleich zu einem statischen System verringert werden.

Grundlage des Trainings eines wissensbasierten Systems und/oder selbstlernenden Systems kann beispielsweise ein Algorithmus zum maschinellen Lernen sein. Das maschinelle Lernen kann beispielsweise in Form eines überwachten maschinellen Lernens (engl. supervised machine learning), eines unüberwachten maschinellen Lernens (engl. unsupervised machine learning) und/oder eines bestärkenden maschinellen Lernens (engl. reinforcement machine learning) erfolgen. Algorithmen zum maschinellen Lernen können zumindest teilweise auf einem künstlichen neuronalen Netz, einer Support Vector Maschine, einer Clusteranalyse oder einer Kombination mehrerer (z.B. aller) dieser Techniken basieren.

Alternativ oder zusätzlich kann das Bestimmen des erwarteten Energiebedarfs für die Auslieferung der Sendungen entlang der möglichen Auslieferungsroute durch ein Fahrzeug mit der möglichen Fahrzeugkonfiguration beispielsweise durch das Simulieren und/oder Berechnen des erwarteten Energiebedarfs erfolgen. Das Simulieren kann beispielsweise auf einem mathematischen und/oder physischen Modell des Fahrzeugs mit der möglichen Fahrzeugkonfiguration (z.B. ein mathematisches und/oder physisches Modells, das den Zusammenhang zwischen der Fahrzeugkonfiguration und dem erwarteten Energiebedarf abbildet) beruhen, dass im Rahmen des Simulierens verwendet wird, um eine Aussage treffen zu können, wie hoch der erwartete Energiebedarf ist. Hierbei können weitere Informationen wie beispielsweise Wetterinformationen und/oder Verkehrsinformationen berücksichtigt werden. Auch in diesem Fall kann der tatsächliche Energiebedarf von diesem (z.B. simulierten und/oder berechneten) erwarteten Energiebedarf abweichen.

Ferner kann das Bestimmen der Auslieferungsroute und der Fahrzeugkonfiguration beispielsweise den folgenden Schritt umfassen:
- Bestimmen, ob der erwartete Energiebedarf für die Auslieferung der Sendungen entlang der möglichen Auslieferungsroute (z.B. der ersten möglichen Auslieferungsroute) durch ein Fahrzeug mit der möglichen Fahrzeugkonfiguration (z.B. der ersten möglichen Fahrzeugkonfiguration) eine vorgegebenen Energiebedarfsbedingung erfüllt, und wobei die mögliche Auslieferungsroute nur dann als Auslieferungsroute zum Ausliefern der Sendungen und die mögliche Fahrzeugkonfiguration nur dann als Fahrzeugkonfiguration für ein Fahrzeug zum Ausliefern der Sendungen entlang der Auslieferungsroute bestimmt (z.B. ausgewählt) werden, wenn bestimmt wird, dass die vorgegebene Energiebedarfsbedingung erfüllt ist.

Eine Energiebedarfsbedingung kann beispielsweise einen Energiebedarf in Form eines Energiebedarfsschwellwerts vorgegeben, der durch den erwarteten Energiebedarf für die Auslieferung der Sendungen entlang der möglichen Auslieferungsroute (z.B. der ersten möglichen Auslieferungsroute) durch ein Fahrzeug mit der möglichen Fahrzeugkonfiguration (z.B. der ersten möglichen Fahrzeugkonfiguration) eines Fahrzeugs zum Ausliefern der Sendungen entlang dieser möglichen Auslieferungsroute nicht überschritten werden darf, um die Energiebedarfsbedingung zu erfüllen. Dabei soll unter einem Energiebedarf, wie oben offenbart, beispielsweise ein absoluter Energiebedarf (z.B. ein Energiebedarf in Kilowattstunde), ein absoluter Kraftstoffbedarf (z.B. ein Benzin- oder Dieselbedarf in Liter), ein normierter Energiebedarf (z.B. eine Leistung in Kilowatt (d.h. ein Energiebedarf pro Zeiteinheit) oder ein Energiebedarf pro Streckeneinheit (z.B. Kilometer) oder pro Sendung) und/oder ein normierter Kraftstoffbedarf (z.B. ein Benzin- oder Dieselbedarf in Liter pro Zeiteinheit (z.B. Minute oder Stunde) oder pro Streckeneinheit (z.B. Kilometer) oder pro Sendung), der von dem jeweiligen Fahrzeug während der jeweiligen Auslieferung erfasst und/oder bestimmt wurde, verstanden werden.

Dies ist beispielsweise vorteilhaft, um zu prüfen, ob die Kombination der möglichen Auslieferungsroute und der möglichen Fahrzeugkonfiguration zu einer möglichst energieeffizienten Auslieferung der Sendungen führt (d.h. einer Auslieferung der Sendungen mit einem erwarteten Energiebedarf, der die vorgegebene Energiebedarfsbedingung erfüllt).

Zum Beispiel umfasst das Bestimmen der Auslieferungsroute und der Fahrzeugkonfiguration, wenn bestimmt wird, dass die vorgegebene Energiebedarfsbedingung nicht erfüllt ist, die folgenden zusätzlichen Schritte:
- Bestimmen zumindest einer weiteren möglichen Auslieferungsroute (z.B. einer zweiten möglichen Auslieferungsroute) zum Ausliefern der Sendungen,
- Bestimmen einer weiteren möglichen Fahrzeugkonfiguration (z.B. einer zweiten möglichen Fahrzeugkonfiguration) eines Fahrzeugs zum Ausliefern der Sendungen entlang der weiteren Auslieferungsroute,
- Bestimmen des erwarteten Energiebedarfs für die Auslieferung der Sendungen entlang der weiteren möglichen Auslieferungsroute durch ein Fahrzeug mit der weiteren möglichen Fahrzeugkonfiguration,
- Bestimmen, ob der erwartete Energiebedarf für die Auslieferung der Sendungen entlang der weiteren möglichen Auslieferungsroute durch ein Fahrzeug mit der weiteren möglichen Fahrzeugkonfiguration die vorgegebene Energiebedarfsbedingung erfüllt.

Diese zusätzlichen Schritte im Zusammenhang mit der weiteren möglichen Auslieferungsroute und der weiteren möglichen Fahrzeugkonfigurationen können beispielsweise entsprechend den oben offenbarten Schritten im Zusammenhang mit der möglichen Auslieferungsroute und der möglichen Fahrzeugkonfiguration erfolgen. Dementsprechend sollen die entsprechenden Offenbarungen im Zusammenhang mit der möglichen Auslieferungsroute und der möglichen Fahrzeugkonfiguration auch als Offenbarungen im Zusammenhang mit der weiteren möglichen Auslieferungsroute und der weiteren möglichen Fahrzeugkonfiguration verstanden werden.

Mit anderen Worten können die zusätzlichen Schritte im Zusammenhang mit der weiteren möglichen Auslieferungsroute und der weiteren möglichen Fahrzeugkonfigurationen als Wiederholung der oben offenbarten Schritte im Zusammenhang mit der möglichen Auslieferungsroute und der möglichen Fahrzeugkonfiguration verstanden werden. Als Ergebnis eines ersten Durchlaufs dieser Schritte werden beispielsweise eine erste mögliche Auslieferungsroute und eine erste mögliche Fahrzeugkonfiguration und als Ergebnis einer ersten Wiederholung dieser Schritte werden beispielsweise eine zweite mögliche Auslieferungsroute (z.B. eine zweite von der ersten verschiedene Auslieferungsroute) und eine zweite mögliche Fahrzeugkonfiguration (z.B. eine zweite von der ersten verschiedene Fahrzeugkonfiguration) erhalten.

Dabei können allerdings Maßnahmen getroffen werden, um zu vermeiden, dass der gleiche erwartete Energiebedarf für die Auslieferung der Sendungen entlang der weiteren möglichen Auslieferungsroute durch ein Fahrzeug mit der möglichen weiteren Fahrzeugkonfiguration bestimmt wird. Zum Beispiel kann die weitere mögliche Auslieferungsroute (z.B. die zweite mögliche Auslieferungsroute) derart bestimmt werden, dass sie von der zuvor bestimmten möglichen Auslieferungsroute (z.B. der ersten möglichen Auslieferungsroute und/oder allen zuvor bestimmten möglichen Auslieferungsrouten) verschieden ist. Zu diesem Zweck kann das Bestimmen der weiteren möglichen Auslieferungsroute gemäß zumindest teilweise anderen Vorgaben als das Bestimmen der zuvor bestimmten möglichen Auslieferungsroute (z.B. allen zuvor bestimmten möglichen Auslieferungsrouten) erfolgen, zum Beispiel gemäß einem anderen vorgegebenen Routenplanungsalgorithmus und/oder einem oder mehreren anderen vorgegebenen Routenkriterien wie beispielsweise "kürzeste Route" oder "schnellste Route" oder "energieeffizienteste Route" und/oder einer anderen vorgegebenen Reihenfolge der durch die Sendungsauslieferungsinformationen repräsentierten Auslieferungspositionen. Es versteht sich, dass es ausreicht, eine der Vorgaben zum Bestimmen der weiteren möglichen Auslieferungsroute gegenüber dem Bestimmen der zuvor bestimmten möglichen Auslieferungsroute (z.B. allen zuvor bestimmten möglichen Auslieferungsrouten) zu ändern. Beispielsweise kann das Bestimmen der weiteren möglichen Auslieferungsroute gemäß dem gleichen vorgegebenen Routenplanungsalgorithmus wie das Bestimmen der zuvor bestimmten möglichen Auslieferungsroute (z.B. aller zuvor bestimmten möglichen Auslieferungsrouten) und gemäß einer anderen vorgegebenen Reihenfolge wie das Bestimmen der zuvor bestimmten möglichen Auslieferungsroute (z.B. aller zuvor bestimmten möglichen Auslieferungsrouten) erfolgen.

Danach kann beispielsweise die weitere mögliche Fahrzeugkonfiguration eines Fahrzeugs zum Ausliefern der Sendungen entlang der weiteren möglichen Auslieferungsroute zumindest teilweise basierend auf der zuvor bestimmten weiteren möglichen Auslieferungsroute bestimmt werden.

Wenn anschließend bestimmt wird, dass der erwartete Energiebedarf für die Auslieferung der Sendungen entlang der weiteren möglichen Auslieferungsroute durch ein Fahrzeug mit der möglichen weiteren Fahrzeugkonfiguration die vorgegebene Energiebedarfsbedingung erfüllt, kann beispielsweise die weitere mögliche Auslieferungsroute und die weitere mögliche Fahrzeugkonfiguration als Auslieferungsroute und als Fahrzeugkonfiguration bestimmt (z.B. ausgewählt) werden. Andernfalls werden diese Schritte beispielsweise solange mit zumindest teilweise veränderten Vorgaben für das Bestimmen einer weiteren möglichen Auslieferungsroute wiederholt werden, bis die vorgegebene Energiebedarfsbedingung erfüllt oder eine Abbruchbedingung (z.B. eine maximale Anzahl von Wiederholungen) erreicht ist. Hierdurch wird eine Funktionsweise wie bei einem genetischen und/oder evolutionären Algorithmus erhalten.

Das Bestimmen der möglichen Auslieferungsroute (z.B. der ersten möglichen Auslieferungsroute) und/oder der weiteren möglichen Auslieferungsroute (z.B. der zweiten möglichen Auslieferungsroute) erfolgt beispielsweise durch eine Routenplanungskomponente der offenbarten Vorrichtung und/oder des offenbarten Systems. Ein wissensbasiertes System und/oder selbstlernendes System zum Bestimmen der möglichen Fahrzeugkonfiguration (z.B. der ersten Fahrzeugkonfiguration) und/oder der weiteren möglichen Fahrzeugkonfiguration (z.B. der zweiten Fahrzeugkonfiguration) kann beispielsweise durch eine wissensbasierte und/oder selbstlernende Fahrzeugkonfigurationskomponente der offenbarten Vorrichtung und/oder des offenbarten Systems gebildet werden. Diese wissensbasierte und/oder selbstlernende Fahrzeugkonfigurationskomponente kann ferner auch zum Bestimmen des erwarteten Energiebedarfs dienen. Alternativ oder zusätzlich kann der erwartete Energiebedarf auch durch eine Simulations- und/oder Berechnungskomponente der offenbarten Vorrichtung und/oder des offenbarten Systems simuliert und/oder berechnet werden. Diese Komponenten können als (z.B. zumindest teilweise oder vollständig verschiedene) Hardwarekomponenten (z.B. als Servervorrichtungen des offenbarten Systems) und/oder Softwarekomponenten (z.B. als auf einem Prozessor der offenbarten Vorrichtung ausgeführte Computerprogramme) und/oder als Kombination aus (z.B. zumindest teilweise oder vollständig verschiedene) Hardware- und Softwarekomponenten der offenberaten Vorrichtung und/oder des offenbarten Systems gebildet werden.

In einer beispielhaften Ausführungsform der Erfindung umfasst das Bestimmen der Auslieferungsroute und der Fahrzeugkonfiguration die folgenden Schritte:
- Auswählen der bestimmten Auslieferungsroute aus einer Vielzahl von möglichen Auslieferungsrouten zum Ausliefern der Sendungen und/oder der bestimmten Fahrzeugkonfiguration aus einer Vielzahl von möglichen Fahrzeugkonfigurationen für ein Fahrzeug zum Ausliefern der Sendungen entlang der Auslieferungsroute.

Dabei kann die Vielzahl der möglichen Auslieferungsrouten und die Vielzahl von möglichen Fahrzeugkonfigurationen entsprechend den oben offenbarten Schritten zum Bestimmen der möglichen Auslieferungsroute und der möglichen Fahrzeugkonfiguration erfolgen. Dementsprechend können die Vielzahl von möglichen Auslieferungsrouten zumindest eine erste mögliche Auslieferungsroute und eine zweite mögliche Auslieferungsroute (z.B. eine zweite von der ersten verschiedene Auslieferungsroute) und die Vielzahl von möglichen Fahrzeugkonfigurationen zumindest eine erste mögliche Fahrzeugkonfiguration und eine zweite mögliche Fahrzeugkonfiguration (z.B. eine zweite von der ersten verschiedene Fahrzeugkonfiguration) umfassen.

Es kann vorgesehen sein, dass jede der möglichen Auslieferungsrouten der Vielzahl von möglichen Auslieferungsrouten derart bestimmt wird, dass sie von den anderen möglichen Auslieferungsrouten der Vielzahl von möglichen Auslieferungsrouten verschieden ist. Zu diesem Zweck kann das Bestimmen jeder der möglichen Auslieferungsroute der Vielzahl von möglichen Auslieferungsrouten gemäß zumindest teilweise anderen Vorgaben als das Bestimmen der anderen möglichen Auslieferungsrouten der Vielzahl von möglichen Auslieferungsrouten erfolgen, zum Beispiel gemäß einem anderen vorgegebenen Routenplanungsalgorithmus und/oder einem oder mehreren anderen vorgegebenen Routenkriterien wie beispielsweise "kürzeste Route" oder "schnellste Route" oder "energieeffizienteste Route" und/oder einer anderen vorgegebenen Reihenfolge der durch die Sendungsauslieferungsinformationen repräsentierten Auslieferungspositionen. Dabei kann es ausreichen, wenn eine der Vorgaben anders ist. Beispielsweise kann jede der möglichen Auslieferungsroute der Vielzahl von Auslieferungsrouten gemäß dem gleichen vorgegebenen Routenplanungsalgorithmus und gemäß einer anderen vorgegebenen Reihenfolge der Auslieferungspositionen bestimmt werden.

Ferner kann für jede der möglichen Auslieferungsrouten und/oder jede der möglichen Fahrzeugkonfigurationen der erwartete Energiebedarf für die Auslieferung der Sendungen entlang der jeweiligen möglichen Auslieferungsroute durch ein Fahrzeug mit der jeweiligen möglichen Fahrzeugkonfiguration bestimmt werden, wobei die Auslieferungsroute der möglichen Auslieferungsrouten und/oder die Fahrzeugkonfiguration der möglichen Fahrzeugkonfigurationen mit dem geringsten erwarteten Energiebedarf für die Auslieferung der Sendungen ausgewählt wird.

In einer beispielhaften Ausführungsform der Erfindung erfolgt das Bestimmen der Auslieferungsroute und der Fahrzeugkonfiguration zumindest teilweise gemäß einem evolutionären Algorithmus und/oder einem Algorithmus zum maschinellen Lernen.

In einer beispielhaften Ausführungsform der Erfindung repräsentieren die historischen Auslieferungsinformationen für jede der mit den Auslieferungsinformationen assoziierten Auslieferungen von Sendungen ferner zumindest eine oder mehrere der folgenden Angaben:
- eine Angabe zu einer Fahrzeuggeschwindigkeit und/oder Fahrzeugbeschleunigung auf der Auslieferungsroute und/oder auf einem Abschnitt der Auslieferungsroute der mit der jeweiligen Auslieferungsinformation assoziierten Auslieferung von Sendungen,
- eine Angabe zur Beschaffenheit der Auslieferungsroute und/oder eines Abschnitts der Auslieferungsroute der mit der jeweiligen Auslieferungsinformation assoziierten Auslieferung von Sendungen, und/oder
- eine Angabe zum Zeitverlauf der mit der jeweiligen Auslieferungsinformation assoziierten Auslieferung von Sendungen.

Eine Angabe zu einer Fahrzeuggeschwindigkeit repräsentiert beispielsweise eine durch das Fahrzeug erfasste und/oder bestimmte Fahrzeuggeschwindigkeit des Fahrzeugs auf der Auslieferungsroute und/oder auf einem Abschnitt der Auslieferungsroute. Zum Beispiel kann eine Angabe zu einer Fahrzeuggeschwindigkeit eine durch das Fahrzeug erfasste durchschnittliche Fahrzeuggeschwindigkeit des Fahrzeugs auf der Auslieferungsroute und/oder auf einem Abschnitt der Auslieferungsroute repräsentieren. Alternativ kann eine Angabe zu einer Fahrzeuggeschwindigkeit eine durch das Fahrzeug an einer bestimmten Position auf der Auslieferungsroute erfasste Fahrzeuggeschwindigkeit des Fahrzeugs repräsentieren.

Eine Angabe zu einer Fahrzeugbeschleunigung repräsentiert beispielsweise eine durch das Fahrzeug erfasste und/oder bestimmte Fahrzeugbeschleunigung (d.h. Beschleunigung und/oder Verzögerung) des Fahrzeugs auf der Auslieferungsroute und/oder auf einem Abschnitt der Auslieferungsroute. Zum Beispiel kann eine Angabe zu einer Fahrzeugbeschleunigung eine durch das Fahrzeug erfasste durchschnittliche Fahrzeugbeschleunigung des Fahrzeugs auf der Auslieferungsroute und/oder auf einem Abschnitt der Auslieferungsroute repräsentieren. Alternativ kann eine Angabe zu einer Fahrzeugbeschleunigung eine durch das Fahrzeug an einer bestimmten Position auf der Auslieferungsroute erfasste Fahrzeugbeschleunigung des Fahrzeugs repräsentieren.

Wenn die Angabe zur Fahrzeuggeschwindigkeit und/oder Fahrzeugbeschleunigung eine erfasste Fahrzeuggeschwindigkeit und/oder Fahrzeugbeschleunigung repräsentiert, kann sie ferner beispielsweise einen Erfassungszeitpunkt (z.B. an dem die Fahrzeuggeschwindigkeit und/oder die Fahrzeugbeschleunigung erfasst wurde) und/oder eine Erfassungsposition (z.B. an der die Fahrzeuggeschwindigkeit und/oder die Fahrzeugbeschleunigung erfasst wurde) repräsentieren. Wenn die Angabe zur Fahrzeuggeschwindigkeit und/oder Fahrzeugbeschleunigung dagegen eine durchschnittliche Fahrzeuggeschwindigkeit und/oder Fahrzeugbeschleunigung repräsentiert, kann sie ferner beispielsweise einen Erfassungszeitraum (z.B. für den die durchschnittliche Fahrzeuggeschwindigkeit und/oder die durchschnittliche Fahrzeugbeschleunigung bestimmt wurde) und/oder einen Erfassungsabschnitt (z.B. einen Abschnitt der Auslieferungsroute für den die durchschnittliche Fahrzeuggeschwindigkeit und/oder die durchschnittliche Fahrzeugbeschleunigung bestimmt wurde) repräsentieren. Es versteht sich, dass die Angabe zur Fahrzeuggeschwindigkeit und/oder Fahrzeugbeschleunigung ein Vektor (z.B. ein Geschwindigkeitsvektor und/oder ein Beschleunigungsvektor) und/oder ein Betrag (z.B. ein Betrag einer Geschwindigkeit und/oder Beschleunigung des Fahrzeugs) repräsentieren kann.

Durch solche Angaben zur Fahrzeuggeschwindigkeit und/oder Fahrzeugbeschleunigung können beispielsweise Rückschlüsse auf das Verkehrsaufkommen und/oder mögliche Verzögerungen auf der Auslieferungsroute und/oder einem Abschnitt auf der Auslieferungsroute gezogen werden.

Unter einer Angabe zu einer Beschaffenheit der Auslieferungsroute und/oder eines Abschnitts der Auslieferungsroute sollen beispielsweise durch das Fahrzeug erfasste und/oder bestimmte für die Beschaffenheit der Auslieferungsroute und/oder eines Abschnitts der Auslieferungsroute charakteristische Parameter wie eine Steigung (z.B. eine maximale und/oder minimale und/oder durchschnittliche Steigung) und/oder ein Verkehrswegbelag (z.B. Asphalt und/oder Kies und/oder Erde) und/oder das Vorhandensein von Hindernissen (z.B. eine oder mehrere Treppenstufen, ein Zaun, etc.) auf der Auslieferungsroute und/oder auf einem Abschnitt der Auslieferungsroute verstanden werden. Ferner kann eine Angabe zu einer Beschaffenheit der Auslieferungsroute und/oder eines Abschnitts der Auslieferungsroute beispielsweise einen Erfassungszeitpunkt und/oder einen Erfassungszeitraum und/oder eine Erfassungsposition und/oder einen Erfassungsabschnitt repräsentieren.

Durch solche Angaben zur Beschaffenheit der Auslieferungsroute und/oder eines Abschnitts der Auslieferungsroute kann beispielsweise ein Zusammenhang zwischen dieser Beschaffenheit und dem Fahrzeugverhalten (z.B. einer erfassten und/oder bestimmten Fahrzeuggeschwindigkeit und/oder Fahrzeugbeschleunigung) hergestellt werden.

Eine Angabe zum Zeitverlauf der mit der jeweiligen Auslieferungsinformation assoziierten Auslieferung von Sendungen kann beispielsweise den Zeitverlauf der mit der jeweiligen Auslieferungsinformation assoziierten Auslieferung von Sendungen repräsentieren. Zum Beispiel kann eine Angabe zum Zeitverlauf der mit der jeweiligen Auslieferungsinformation assoziierten Auslieferung von Sendungen jeweils den durch das Fahrzeug erfassten und/oder bestimmten Zeitpunkt repräsentieren, an dem das Fahrzeug eine Sendungsauslieferungsposition erreicht hat. Dies erlaubt beispielsweise Rückschlüsse auf die Zeitdauer, die das Fahrzeug benötigt hat, um sich von einer Sendungsauslieferungsposition zu der nächsten Sendungsauslieferungsposition entlang der Auslieferungsroute zu bewegen.

Diese Angaben können beispielsweise im Rahmen eines Trainings eines oben offenbarten wissensbasierten und/oder selbstlernenden Systems zum Bestimmen der Fahrzeugkonfiguration vorteilhafterweise berücksichtigt werden.

In einer beispielhaften Ausführungsform der Erfindung repräsentieren die Sendungsauslieferungsinformationen für jede der Sendungen ferner zumindest eine oder mehrere der folgenden Angaben:
- eine Angabe zu Außenabmessungen der jeweiligen Sendung,
- eine Angabe zu einem Gewicht der jeweiligen Sendung,
- eine Angabe zu einem Auslieferungszeitpunkt und/oder zu einem Auslieferungszeitraum für die Auslieferung der jeweiligen Sendung,
- eine Angabe zu einer Beschaffenheit der Auslieferungsposition für die Auslieferung der jeweiligen Sendung, und/oder
- eine Angabe zu einem Empfängername und/oder zu einer Empfängeranschrift der jeweiligen Sendung.

Eine Angabe zu Außenabmessungen der jeweiligen Sendung repräsentiert beispielsweise die Außenabmessungen der jeweiligen Sendung; und eine Angabe zu einem Gewicht der jeweiligen Sendung repräsentiert beispielsweise das Gewicht der jeweiligen Sendung.

Eine Angabe zu einem Auslieferungszeitpunkt für die Auslieferung der jeweiligen Sendung repräsentiert beispielsweise einen Zeitpunkt, an dem die jeweilige Sendung an der jeweiligen Sendungsauslieferungsposition ausgeliefert werden soll. Dementsprechend repräsentiert ein Auslieferungszeitraum für die Auslieferung der jeweiligen Sendung beispielsweise einen Zeitraum, in dem die jeweilige Sendung an der jeweiligen Sendungsauslieferungsposition ausgeliefert werden soll.

Eine Angabe zu einer Beschaffenheit der Auslieferungsposition für die Auslieferung der jeweiligen Sendung soll beispielsweise eine für die erwartete Beschaffenheit der Auslieferungsroute an der Auslieferungsposition charakteristische Parameter wie eine Steigung (z.B. eine maximale und/oder minimale und/oder durchschnittliche Steigung) und/oder ein Verkehrswegbelag (z.B. Asphalt und/oder Kies und/oder Erde) und/oder das Vorhandensein von Hindernissen (z.B. eine oder mehrere Treppenstufen, ein Zaun, etc.) verstanden werden.

Eine Angabe zu einem Empfängername und/oder zu einer Empfängeranschrift repräsentiert beispielsweise den Empfängernamen und/oder die Empfängeranschrift.

Diese Angaben erlauben beispielsweise ein effizientes Bestimmen der Fahrzeugkonfiguration. So kann für eine Sendung mit größeren Außenabmessungen oder einem höheren Gewicht beispielsweise eine andere Fahrzeugkonfiguration eine möglichst energieeffiziente Auslieferung ermöglichen als für eine Sendung mit kleineren Außenabmessungen oder einem geringeren Gewicht. Wenn sich aus einer Angabe zu einer Beschaffenheit der Auslieferungsposition ergibt, dass an der Auslieferungsposition Hindernisse wie Treppenstufen oder ein Zaun vorhanden sind, wird beispielsweise eine Fahrzeugkonfiguration für ein Fahrzeug bestimmt, das diese Hindernisse überwinden kann (z.B. im Fall von Treppenstufen oder einem Zaun ein Luftfahrzeug wie eine Flugdrohne).

In einer beispielhaften Ausführungsform der Erfindung umfasst das Verfahren ferner die folgenden Schritte:
- Erhalten und/oder Bereithalten von mit der Auslieferung der Sendungen assoziierten Umweltinformationen, wobei das Bestimmen der Auslieferungsroute und/oder der Fahrzeugkonfiguration und/oder des erwarteten Energiebedarfs ferner zumindest teilweise auf den Umweltinformationen basiert.

Umweltinformationen repräsentieren zum Beispiel erfassbare und/oder bestimmbare (z.B. prognostizierbare) Umweltparameter die Einfluss auf den erwarteten Energiebedarf haben können.

Die Umweltinformationen können beispielsweise zumindest eine Angabe zum erwarteten Wetter und/oder zum erwarteten Sonnenstand (z.B. das erwartete Wetter und/oder den erwarteten Sonnenstand an zumindest einer Auslieferungsposition der Auslieferungspositionen und/oder auf der Auslieferungsroute und/oder einem Abschnitt der Auslieferungsroute) repräsentierende Wetterinformationen umfassen. Die Wetterinformationen werden beispielsweise von einem Wetterdienst und/oder zumindest teilweise basierend auf durch Sensoren erfassten Umweltparameter bereitgestellt.

Alternativ oder zusätzlich können die Umweltinformationen zumindest eine Angabe zu erwarteten Verkehrsverzögerungen (z.B. erwartete Verkehrsverzögerungen auf der Auslieferungsroute und/oder einem Abschnitt der Auslieferungsroute) wie Staus und/oder Unfällen und/oder Baustellen und/oder Sperrungen repräsentierende Verkehrsinformationen umfassen. Die Verkehrsinformationen werden beispielsweise von einem Verkehrsdienst und/oder zumindest teilweise basierend auf durch Sensoren erfassten Verkehrsparameter bereitgestellt.

Insbesondere kann das Bestimmen des erwarteten Energiebedarfs und/oder der Fahrzeugkonfiguration zumindest teilweise auf den Umweltinformationen basieren. Zum Beispiel kann sich der erwartete Energiebedarf bei Fahrzeugen mit einem Elektroantrieb und Photovoltaikmodulen abhängig vom erwarteten Wetter und/oder Sonnenstand ändern. Wenn sonniges Wetter auf der Auslieferungsroute erwartet wird, wird beispielsweise ein Fahrzeugkonfiguration bestimmt, die ein Fahrzeugen mit Elektroantrieb und Photovoltaikmodulen repräsentiert, wohingegen, wenn bewölktes Wetter auf der Auslieferungsroute erwartet wird, beispielsweise ein Fahrzeugkonfiguration bestimmt wird, die ein Fahrzeug mit Verbrennungsmotor repräsentiert.

In einer beispielhaften Ausführungsform der Erfindung umfasst das Verfahren ferner den folgenden Schritt:
- Erhalten von mit der Auslieferung der Sendung assoziierten historischen Auslieferungsinformationen, wenn das Fahrzeug mit der bestimmten Fahrzeugkonfiguration die Sendungen entlang der bestimmten Auslieferungsroute ausgeliefert hat, wobei die Auslieferungsinformationen zumindest Angaben zu der bestimmten Auslieferungsroute, zu dem Energiebedarf und zu der bestimmten Fahrzeugkonfiguration repräsentieren.

In einer beispielhaften Ausführungsform der Erfindung umfasst das Verfahren ferner die folgenden Schritte:
- Erhalten und/oder Bereithalten von Navigationskarteninformationen zum Bestimmen einer Auslieferungsroute zum Ausliefern der Sendungen.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1a: ein Flussdiagramm eines Ausführungsbeispiels eines Verfahrens gemäß einem beispielhaften Aspekt der Erfindung;
- Fig. 1b: optionale Schritte eines Ausführungsbeispiels eines Verfahrens gemäß einem beispielhaften Aspekt der Erfindung;
- Fig. 2: eine schematische Darstellung einer Ausführungsform einer Vorrichtung gemäß einem beispielhaften Aspekt der Erfindung;
- Fig. 3: eine schematische Darstellung einer Ausführungsform eines Systems gemäß einem beispielhaften Aspekt der Erfindung; und
- Fig. 4: beispielhafte Ausführungsformen von Speichermedien.

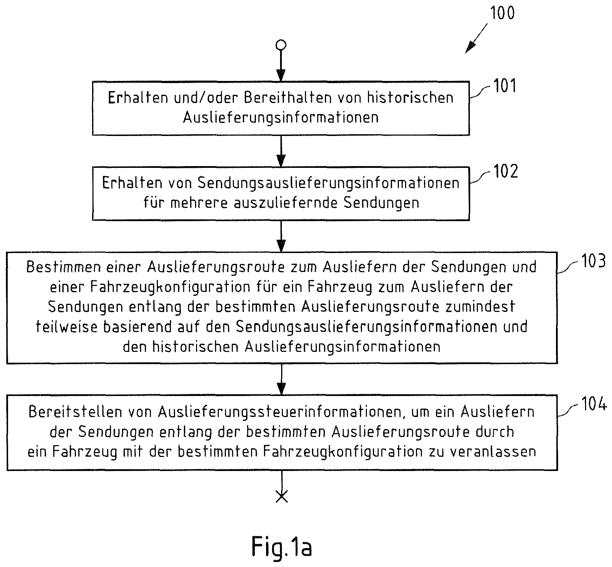

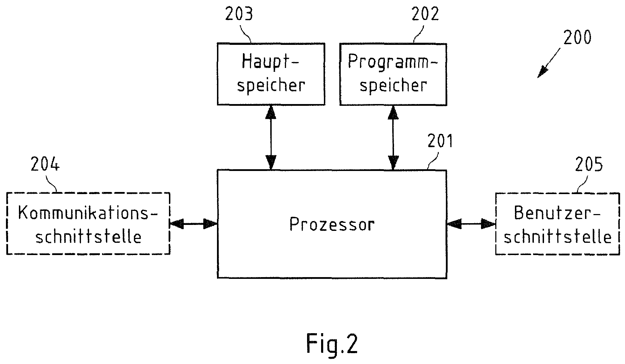

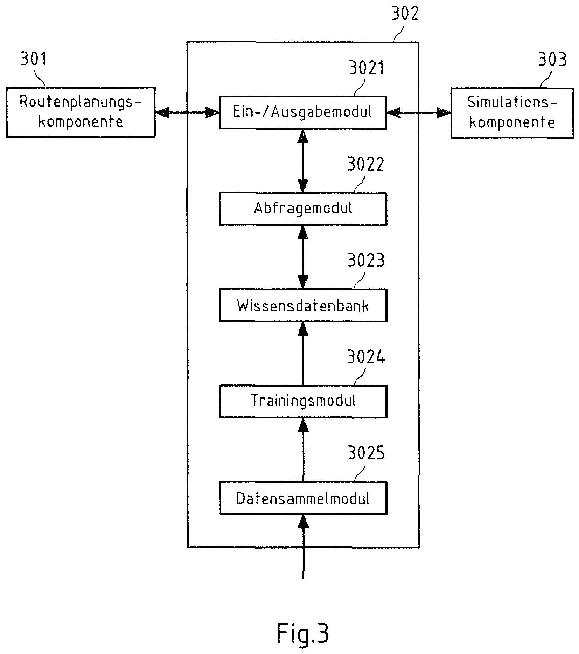

Fig. 1a zeigt ein Flussdiagramm mit Schritten einer beispielhaften Ausführungsform eines Verfahrens gemäß einem beispielhaften Aspekt der Erfindung. Die Schritte 101 bis 104 des Flussdiagramms 100 können beispielsweise von einer Vorrichtung wie der unten offenbarten Vorrichtung 200 aus Fig. 2 oder von einem System wie dem unten offenbarten System 300 aus Fig. 3 ausgeführt werden.

Im Folgenden wird beispielhaft davon ausgegangen, dass das Verfahren durch eine Vorrichtung und/oder ein System eines Auslieferungsdienstes (z.B. eines Post- und/oder Paketdienstes) ausgeführt wird. Mehrere verschiedene Fahrzeuge des Auslieferungsdienstes sind beispielsweise derart eingerichtet, dass sie, nachdem sie eine Auslieferung von Sendungen (d.h. mehreren Sendungen) im Rahmen eines Auslieferungsauftrags ausgeführt haben, mit der Auslieferung assoziierte historische Auslieferungsinformationen an die Vorrichtung und/oder das System, das die Schritte 101 bis 104 des Flussdiagramms 100 ausführt, kommunizieren. Ein Fahrzeug des Auslieferungsdienstes, das eine solche Auslieferung von Sendungen ausführt, ist beispielsweise ein entsprechend eingerichtetes autonomes und/oder teilautonomes Landfahrzeug, Wasserfahrzeug und/oder ein Luftfahrzeug.

Dabei soll unter der Auslieferung von Sendungen (d.h. mehreren Sendungen) vorliegend beispielsweise der Transport jeder der Sendungen durch das Fahrzeug, das die Auslieferung ausführt, entlang einer Auslieferungsoute zu einer jeweiligen Auslieferungsposition für die Auslieferung der jeweiligen Sendung verstanden werden. An der jeweiligen Auslieferungsposition wird die jeweilige Sendung beispielsweise durch das Fahrzeug oder einen Zusteller zur Abholung und/oder zum Empfang durch den Empfänger der Sendung bereitgestellt (z.B. in einem Aufnahmefach einer Aufnahmevorrichtung wie einem Brief- und/oder Paketkasten abgelegt).

In Schritt 101 werden die historischen Auslieferungsinformationen erhalten und/oder bereitgehalten. Dabei sind die historischen Auslieferungsinformationen mit mehreren durch ein oder verschiedene Fahrzeuge des Auslieferungsdienstes ausgeführten Auslieferungen von Sendungen assoziiert sind, wobei die historischen Auslieferungsinformationen für jede der mit den historischen Auslieferungsinformationen assoziierten Auslieferungen von Sendungen zumindest Angaben zu einer Auslieferungsroute, zu einem Energiebedarf und zu einer Fahrzeugkonfiguration repräsentieren.

Die historischen Auslieferungsinformationen repräsentieren beispielsweise für jede der mit den Auslieferungsinformationen assoziierten Auslieferungen von Sendungen eine oder mehrere für die jeweilige Auslieferung von Sendungen charakteristische Angaben. Wie oben offenbart, soll eine solche für eine Auslieferung von Sendungen charakteristische Angabe beispielsweise zumindest einen von dem Fahrzeug, das die Auslieferung ausgeführt hat, während der jeweiligen Auslieferung erfassten und/oder bestimmten Parameter wie den Energiebedarf des Fahrzeugs repräsentieren.

Im Folgenden wird beispielhaft davon ausgegangen, dass die historischen Auslieferungsinformationen für jede der mit den historischen Auslieferungsinformationen assoziierten Auslieferungen von Sendungen die Auslieferungsroute, entlang derer sich das jeweilige Fahrzeug (d.h. das Fahrzeug, das die jeweilige Auslieferung ausgeführt hat) bewegt hat, den Energiebedarf des jeweiligen Fahrzeugs und die Fahrzeugkonfiguration des jeweiligen Fahrzeugs repräsentieren.

Die historischen Auslieferungsinformationen können, wie unten offenbart, beispielsweise zum Trainieren eines wissensbasierten und/oder selbstlernenden Systems verwendet werden.

In einem Schritt 102 werden Sendungsauslieferungsinformationen für mehrere auszuliefernde Sendungen erhalten, wobei die Sendungsauslieferungsinformationen zumindest für jede der Sendungen eine Angabe zur Auslieferungsposition für die Auslieferung der jeweiligen Sendung repräsentieren.
Die mehreren auszuliefernden Sendungen, für die Sendungsauslieferinformationen erhalten werden, sollen beispielsweise innerhalb einer Auslieferung und/oder durch ein Fahrzeug des Auslieferungsdienstes im Rahmen eines Auslieferungsauftrags ausgeliefert werden. Dass die Sendungsauslieferungsinformationen zumindest für jede der Sendungen eine Angabe zur Auslieferungsposition für die Auslieferung der jeweiligen Sendung repräsentieren, soll beispielsweise derart verstanden werden, dass die Sendungsauslieferungsinformationen eine Repräsentation der Auslieferungsposition für die Auslieferung der jeweiligen Sendung enthält.

Anschließend wird in einem Schritt 103 eine Auslieferungsroute zum Ausliefern der Sendungen und eine Fahrzeugkonfiguration für ein Fahrzeug zum Ausliefern der Sendungen entlang der bestimmten Auslieferungsroute zumindest teilweise basierend auf den Sendungsauslieferungsinformationen und den historischen Auslieferungsinformationen bestimmt.

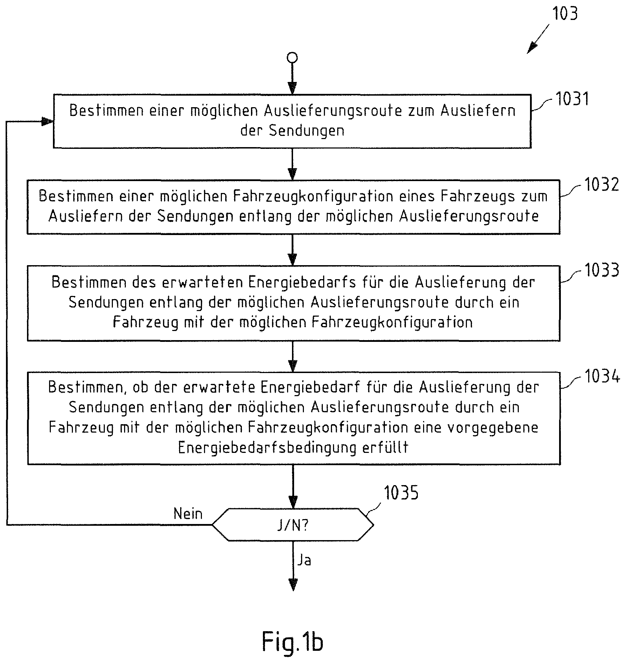

Eine beispielhafte Ausführungsform des Bestimmens gemäß Schritt 103 wird im Folgenden anhand der Schritte 1031 bis 1035 aus Fig. 1b offenbart. Es versteht sich jedoch, dass die Erfindung nicht auf diese Ausführungsform beschränkt ist.

In einem Schritt 1031 wird eine mögliche Auslieferungsroute zum Ausliefern der Sendungen bestimmt. Die mögliche Auslieferungsroute wird beispielsweise derart zumindest teilweise basierend auf den Sendungsauslieferungsinformationen bestimmt, dass sie einen Weg beschreibt, entlang dem sich ein Fahrzeug nacheinander zu den durch die Sendungsauslieferungsinformationen repräsentierten Auslieferungspositionen bewegen kann. Ferner kann das Bestimmen der möglichen Auslieferungsroute auf Navigationskarteninformationen erfolgen. Die mögliche Auslieferungsroute wird beispielsweise gemäß einem vorgegebenen Routenplanungsalgorithmus und/oder einem oder mehreren vorgegebenen Routenkriterien wie beispielsweise "kürzeste Route" oder "schnellste Route" oder "energieeffizienteste Route" und/oder einer vorgegebenen Reihenfolge der durch die Sendungsauslieferungsinformationen repräsentierten Auslieferungspositionen bestimmt. Solche Routenplanungsalgorithmen sind beispielsweise Algorithmen (z.B. heuristische Algorithmen) zur Lösung des sogenannten Problems des Handlungsreisenden.

Anschließend kann n einem Schritt 1032 eine mögliche Fahrzeugkonfiguration eines Fahrzeugs zum Ausliefern der Sendungen entlang der in Schritt 1031bestimmte möglichen Auslieferungsroute zumindest teilweise basierend auf der in Schritt 1031 bestimmten möglichen Auslieferungsroute bestimmt werden.

Die mögliche Fahrzeugkonfiguration wird beispielsweise gemäß einem vorgegebenen Fahrzeugkonfigurationsalgorithmus bestimmt. Ein solcher Fahrzeugkonfigurationsalgorithmus kann beispielsweise auf einem wissensbasierten System (z.B. einem Expertensystem) und/oder einem selbstlernenden System basieren. Ein solches wissensbasiertes System und/oder selbstlernendes System kann beispielsweise zumindest teilweise auf den historischen Auslieferungsinformationen basieren. Zum Beispiel kann ein solches wissensbasiertes System und/oder selbstlernendes System basierend auf den historischen Auslieferungsinformationen derart trainiert werden, dass es für eine in Schritt 1031 bestimmte mögliche Auslieferungsroute eine mögliche Fahrzeugkonfiguration für ein Fahrzeug derart bestimmt, dass erwartet wird, dass ein Fahrzeug mit dieser möglichen Fahrzeugkonfiguration sich entlang dieser möglichen Auslieferungsroute möglichst energieeffizient bewegt und/oder dass der erwartete Energiebedarf für die Auslieferung der Sendungen entlang dieser möglichen Auslieferungsroute durch ein Fahrzeug mit dieser möglichen Fahrzeugkonfiguration möglichst gering ist. Es versteht sich, dass ein solches wissensbasiertes System und/oder selbstlernendes System nicht zwangsläufig die energieeffizienteste mögliche Fahrzeugkonfiguration und/oder die mögliche Fahrzeugkonfiguration mit dem geringsten erwarteten Energiebedarf bestimmt (z.B. weil die historischen Auslieferungsinformationen begrenzt sind und nur ein unvollständiges Training erlauben).

Grundlage des Trainings eines wissensbasierten Systems und/oder selbstlernenden Systems kann beispielsweise ein Algorithmus zum maschinellen Lernen sein. Das maschinelle Lernen kann beispielsweise in Form eines überwachten maschinellen Lernens (engl. supervised machine learning), eines unüberwachten maschinellen Lernens (engl. unsupervised machine learning) und/oder eines bestärkenden maschinellen Lernens (engl. reinforcement machine learning) erfolgen. Algorithmen zum maschinellen Lernen können zumindest teilweise auf einem künstlichen neuronalen Netz, einer Support Vector Maschine, einer Clusteranalyse oder einer Kombination mehrerer (z.B. aller) dieser Techniken basieren. Durch dieses Training kann das wissensbasierte System und/oder selbstlernende System über einen längeren Zeitraum verbessert (d.h. die Prognosegüte wie z.B. die Qualität des durch das System abgebildeten Zusammenhangs zwischen einer oder mehreren Fahrzeugkonfigurationen und einem erwarteten Energieverbrauch) und beispielsweise Abweichungen des erwarteten Energiebedarfs vom tatsächlichen Energiebedarf im Vergleich zu einem statischen System verringert werden.

In einem Schritt 1033 wird ein erwarteter Energiebedarf für die Auslieferung der Sendungen entlang der in Schritt 1031 bestimmten möglichen Auslieferungsroute durch ein Fahrzeug mit der in Schritt 1032 bestimmten möglichen Fahrzeugkonfiguration bestimmt.

Das Bestimmen des erwarteten Energiebedarfs in Schritt 1033 kann beispielsweise ebenfalls durch das wissensbasierte System und/oder selbstlernende System erfolgen. Zum Beispiel kann es basierend auf den historischen Auslieferungsinformationen derart trainiert werden, dass es für eine in Schritt 1031 bestimmte mögliche Auslieferungsroute neben einer möglichen Fahrzeugkonfiguration auch einen erwarteten Energiebedarf für die Auslieferung der Sendungen entlang dieser Auslieferungsroute durch ein Fahrzeug mit dieser Fahrzeugkonfiguration bestimmt. In diesem Fall können die Schritte 1032 und 1033 auch in einem Schritt zusammengefasst werden.

Alternativ oder zusätzlich kann das Bestimmen des erwarteten Energiebedarfs in Schritt 1033 beispielsweise durch das Simulieren und/oder Berechnen des erwarteten Energiebedarfs zumindest teilweise basierend auf der in Schritt 1031 bestimmten möglichen Auslieferungsroute und der in Schritt 1032 bestimmten möglichen Fahrzeugkonfiguration erfolgen.

In einem Schritt 1034 wird bestimmt, ob der erwartete Energiebedarf für die Auslieferung der Sendungen entlang der möglichen Auslieferungsroute durch ein Fahrzeug mit der möglichen Fahrzeugkonfiguration eine vorgegebene Energiebedarfsbedingung erfüllt.

Eine Energiebedarfsbedingung kann beispielsweise einen Energiebedarf in Form eines Energiebedarfsschwellwerts vorgegeben, der durch den erwarteten Energiebedarf für die Auslieferung der Sendungen entlang der möglichen Auslieferungsroute (z.B. der ersten möglichen Auslieferungsroute) durch ein Fahrzeug mit der möglichen Fahrzeugkonfiguration (z.B. der ersten möglichen Fahrzeugkonfiguration) eines Fahrzeugs zum Ausliefern der Sendungen entlang dieser möglichen Auslieferungsroute nicht überschritten werden darf, um die Energiebedarfsbedingung zu erfüllen.

Wenn das Bestimmen in Schritt 1034 ergibt, dass die Energiebedarfsbedingung erfüllt ist, kann die in Schritt 1031 bestimmte mögliche Auslieferungsroute als Auslieferungsroute für die Auslieferung der Sendungen und die in Schritt 1032 bestimmte mögliche Fahrzeugkonfiguration als Fahrzeugkonfiguration für ein Fahrzeug zum Ausliefern der Sendungen bestimmt werden und das Flussdiagramm 100 mit Schritt 104 fortgesetzt werden.

Andernfalls werden die Schritte 1031 bis 1034 beispielsweise wiederholt und eine weitere mögliche Auslieferungsroute und eine weitere mögliche Fahrzeugkonfiguration bestimmt.

Dabei können allerdings Maßnahmen getroffen werden, um zu vermeiden, dass der gleiche erwartete Energiebedarf für die Auslieferung der Sendungen entlang der weiteren möglichen Auslieferungsroute durch ein Fahrzeug mit der möglichen weiteren Fahrzeugkonfiguration bestimmt wird. Zum Beispiel kann die weitere mögliche Auslieferungsroute im Rahmen einer solchen Wiederholung derart bestimmt werden, dass sie von allen zuvor bestimmten möglichen Auslieferungsrouten (z.B. im Rahmen des ersten Durchlaufs und/oder einer oder mehreren vorherigen Wiederholungen der Schritte 1031 bis 1034) verschieden ist. Zu diesem Zweck kann das Bestimmen der weiteren möglichen Auslieferungsroute gemäß zumindest teilweise anderen Vorgaben als das Bestimmen der zuvor bestimmten möglichen Auslieferungsrouten erfolgen, zum Beispiel gemäß einem anderen vorgegebenen Routenplanungsalgorithmus und/oder einem oder mehreren anderen vorgegebenen Routenkriterien wie beispielsweise "kürzeste Route" oder "schnellste Route" oder "energieeffizienteste Route" und/oder einer anderen vorgegebenen Reihenfolge der durch die Sendungsauslieferungsinformationen repräsentierten Auslieferungspositionen. Es versteht sich, dass es ausreicht, eine der Vorgaben zum Bestimmen der weiteren möglichen Auslieferungsroute gegenüber dem Bestimmen der zuvor bestimmten möglichen Auslieferungsroute (z.B. allen zuvor bestimmten möglichen Auslieferungsrouten) zu ändern. Beispielsweise kann lediglich die vorgegebene Reihenfolge der Sendungsauslieferungspositionen mit jeder Wiederholung verändert werden.

Die Schritte 1031 bis 1034 werden beispielsweise solange wiederholt, bis die vorgegebene Energiebedarfsbedingung erfüllt oder eine Abbruchbedingung (z.B. eine maximale Anzahl von Wiederholungen) erreicht ist (vgl. Schritt 1035).. Hierdurch wird eine Funktionsweise wie bei einem genetischen und/oder evolutionären Algorithmus erhalten.

In Schritt 104 werden Auslieferungssteuerinformationen bereitgestellt, um ein Ausliefern der Sendungen entlang der bestimmten Auslieferungsroute durch ein Fahrzeug mit der bestimmten Fahrzeugkonfiguration zu veranlassen.

Die bereitgestellten Auslieferungssteuerungsinformationen umfassen beispielsweise eine Repräsentation der bestimmten Fahrzeugkonfiguration und/oder der bestimmten Auslieferungsroute, um das Ausliefern der Sendungen entlang der bestimmten Auslieferungsroute durch ein Fahrzeug mit der bestimmten Fahrzeugkonfiguration zu veranlassen. Zum Beispiel werden die Auslieferungssteuerungsinformationen zum Abruf durch einen Benutzer (z.B. einen Disponenten) und/oder eine entfernte Vorrichtung (z.B. eine Vorrichtung zum Auswählen und/oder Konfigurieren von Fahrzeugen) und/oder ein Fahrzeug bereitgestellt und/oder an einen Benutzer und/oder eine entfernte Vorrichtung und/oder ein Fahrzeug gesendet. Ferner können die Auslieferungssteuerungsinformationen beispielsweise durch das Ausgeben an einen Benutzer bereitgestellt werden.

Das Veranlassen des Auslieferns der Sendungen entlang der bestimmten Auslieferungsroute durch ein Fahrzeug mit der bestimmten Fahrzeugkonfiguration umfasst beispielsweise das Auswählen eines Fahrzeugs mit der bestimmten Fahrzeugkonfiguration oder, wenn kein Fahrzeug mit der bestimmten Fahrzeugkonfiguration verfügbar ist, das (Um-)Konfigurieren eines Fahrzeugs entsprechend der bestimmten Fahrzeugkonfiguration. Das (Um-)Konfigurieren kann beispielsweise durch den Austausch von Modulen erfolgen, wenn das Fahrzeug modular ist und die bestimmte Fahrzeugkonfiguration ein oder mehrere Module repräsentiert und/oder spezifiziert, mit denen das Fahrzeug ausgestattet sein soll.

Ferner kann das Veranlassen des Auslieferns der Sendungen entlang der bestimmten Auslieferungsroute durch ein Fahrzeug mit der bestimmten Fahrzeugkonfiguration das Ansteuern des ausgewählten und/oder (um-) konfigurierten Fahrzeugs derart, dass das Fahrzeug veranlasst wird, sich zum Ausliefern der Sendungen entlang der bestimmten Auslieferungsroute zu bewegen, umfassen. Zu diesem Zweck kann die bestimmte Auslieferungsroute beispielsweise in eine Navigationseinheit des Fahrzeugs einprogrammiert werden.

Fig. 2 ist eine schematische Darstellung einer beispielhaften Ausführungsform einer Vorrichtung 200 gemäß einem beispielhaften Aspekt der Erfindung. Im Folgenden wird beispielhaft davon ausgegangen, dass die Vorrichtung 200 eine (z.B. zentrale) Servervorrichtung eines Auslieferungsdienstes zum zumindest teilweise Steuern von durch Fahrzeuge des Auslieferungsdienstes auszuführende Auslieferungen und/oder Auslieferungsaufträgen des Auslieferungsdienstes ist.

Die Vorrichtung 200 umfasst beispielhaft einen Prozessor 201 und verbunden mit dem Prozessor 201 einen ersten Speicher als Programm- und Datenspeicher 202, einen zweiten Speicher als Hauptspeicher 203, eine optionale Kommunikationsschnittstelle 204 und eine optionale Benutzerschnittstelle 205.

Unter einem Prozessor soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass die Vorrichtung 200 auch mehrere Prozessoren 201 umfassen kann.

Prozessor 201 führt Programmanweisungen aus, die in Programmspeicher 202 gespeichert sind, und speichert beispielsweise Zwischenergebnisse oder ähnliches in Hauptspeicher 203. Der Programmspeicher 202 enthält beispielsweise Programmanweisungen eines Computerprogramms (z.B. ein gemäß einem beispielhaften Aspekt der Erfindung offenbartes Computerprogramm), die den Prozessor 201 veranlassen, ein gemäß einem beispielhaften Aspekt der Erfindung offenbartes Verfahren (z.B. das Verfahren gemäß dem in Fig. 1 dargestellten Flussdiagram 100) auszuführen und/oder zu steuern, wenn der Prozessor 201 diese in Programmspeicher 202 gespeicherten Programmanweisungen ausführt. Außerdem können in Programmspeicher 202 beispielsweise historische Auslieferungsinformationen gespeichert sein, zum Beispiel in Form von Daten (z.B. Daten einer Datenbank).

Programmspeicher 202 enthält ferner beispielsweise das Betriebssystem der Vorrichtung 200, das beim Starten der Vorrichtung 200 zumindest teilweise in Hauptspeicher 203 geladen und vom Prozessor 201 ausgeführt wird. Insbesondere wird beim Starten der Vorrichtung 200 zumindest ein Teil des Kerns des Betriebssystems in den Hauptspeicher 203 geladen und von Prozessor 201 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Vorrichtung zur Informations- und/oder Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 203 und Programmspeicher 202 können auch als ein Speicher ausgebildet sein. Alternativ können Hauptspeicher 203 und/oder Programmspeicher 202 jeweils durch mehrere Speicher gebildet werden. Ferner können Hauptspeicher 203 und/oder Programmspeicher 202 auch Teil des Prozessors 201 sein. Prozessor 201 steuert die optionale Kommunikationsschnittstelle 204, welche beispielsweise als drahtlose und/oder drahtgebundene Kommunikationsschnittstelle ausgebildet ist. Eine drahtlose und/oder drahtgebundene Kommunikationsschnittstelle kann beispielsweise Informationen (über einen drahtlosen und/oder drahtgebundenen Kommunikationspfad) empfangen und an den Prozessor 201 weiterleiten und/oder Informationen von dem Prozessor 201 empfangen und (über einen drahtlosen und/oder drahtgebundenen Kommunikationspfad) senden.

Ein Beispiel für eine drahtlose Kommunikationsschnittstelle ist ein drahtloser Netzwerkadapter. Zum Beispiel umfasst eine drahtlose Kommunikationsschnittstelle nebst einer Antenne zumindest eine Senderschaltung und eine Empfängerschaltung oder eine Sendeempfängerschaltung. Beispiele für eine drahtlose Kommunikationsschnittstelle sind eine GSM-, UMTS- und/oder LTE-Schnittstelle und/oder eine WLAN- und/oder Bluetooth-Schnittstelle. Die GSM-, UMTS- und LTE-Spezifikationen werden von dem 3rd Generation Partnership Project (3GPP) gepflegt und entwickelt und sind derzeit im Internet unter anderem unter www.3gpp.com erhältlich. WLAN ist zum Beispiel in den Standards der IEEE-802.11-Familie spezifiziert. Die Bluetooth-Spezifikationen sind derzeit im Internet unter www.bluetooth.org erhältlich.

Ein Beispiel für eine drahtgebundene Kommunikationsschnittstelle ist ein drahtgebundener Netzwerkadapter. Zum Beispiel umfasst eine drahtgebundene Kommunikationsschnittstelle zumindest eine Senderschaltung und eine Empfängerschaltung oder eine Sendeempfängerschaltung. Ein Beispiel für eine drahtgebundene Kommunikationsschnittstelle ist eine Ethernet-Schnittstelle. Ethernet ist unter anderem in den Standards der IEEE-802.3-Familie spezifiziert.

Die Kommunikationsschnittstelle 204 ist beispielsweise eingerichtet zum Empfangen von Informationen (z.B. den historischen Auslieferungsinformationen und/oder den Sendungsauslieferungsinformationen) und/oder zum Senden von Informationen (z.B. den Ausslieferungssteuerungsinformationen).

Ferner steuert Prozessor 201 die optionale Benutzerschnittstelle 205, welche eingerichtet ist zum Ausgeben von Informationen (z.B. der Auslieferungssteuerungsinformationen) an einen Benutzer und/oder zum Erfassen von durch einen Benutzer eingegebenen Informationen (z.B. den Sendungsauslieferungsinformationen). Eine Benutzerschnittstelle kann zum Beispiel eine Tastatur, eine Maus, einen Bildschirm, einen berührungsempfindlicher Bildschirm, einen Lautsprecher und/oder ein Mikrofon umfassen.

Die Komponenten 201 bis 205 der Vorrichtung 200 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Vorrichtung 200 neben den Komponenten 201 bis 205 weitere Komponenten umfassen kann.

Fig. 3 zeigt eine schematische Darstellung einer Ausführungsform eines Systems 300 gemäß einem beispielhaften Aspekt der Erfindung. Im Folgenden wird beispielhaft davon ausgegangen, dass das System 300 ein (z.B. zentrales) System eines Auslieferungsdienstes zum zumindest teilweise Steuern von durch Fahrzeuge des Auslieferungsdienstes auszuführende Auslieferungen und/oder Auslieferungsaufträgen des Auslieferungsdienstes ist.

System 300 umfasst eine Routenplanungskomponente 301, eine wissensbasierte und selbstlernende Fahrzeugkonfigurationskomponente 302 und eine optionale Simulationskomponente 303. Diese Komponenten können als (z.B. zumindest teilweise oder vollständig verschiedene) Hardwarekomponenten (z.B. als Servervorrichtungen einer Servercloud) und/oder Softwarekomponenten (z.B. als auf einem Prozessor der oben in Zusammenhang mit Fig. 2 offenbarten Vorrichtung 200 ausgeführten Computerprogrammen) und/oder als Kombination aus (z.B. zumindest teilweise oder vollständig verschiedenen) Hardware- und Softwarekomponenten gebildet werden.

Die Routenplanungskomponente 301 ist beispielsweise eingerichtet zum Bestimmen einer möglichen Auslieferungsroute. Zum Beispiel ist die Routenplanungskomponente 301 eingerichtet, den oben im Zusammenhang mit Fig. 1b offenbarten Schritt 1031 auszuführen.

Die Routenplanungskomponente 301 basiert beispielsweise auf einem (z.B. modifizierten) Algorithmus (z.B. einem heuristischen Algorithmus) zur Lösung des sogenannten Problems des Handlungsreisenden, um die "beste" mögliche Auslieferungsroute zur Auslieferung von Sendungen zu bestimmen. Dabei ist die "beste" mögliche Auslieferungsroute beispielsweise die "energieeffizienteste Route" (z.B. die Auslieferungsroute mit einem möglichst geringen Energiebedarf pro Sendung), wobei die Routenplanungskomponente 301 den Energiebedarf pro Sendung beispielsweise nur anhand der Länge der möglichen Auslieferungsroute, der erwarteten Dauer der Auslieferung der Sendungen entlang der möglichen Auslieferungsroute und des Gewichts der Sendungen bestimmt, so dass es sich nicht tatsächlich um die "energieeffizienteste Route" handeln muss. Ferner können durch die Routenplanungskomponente 301 Vorgaben zum Bestimmen der Auslieferungsroute (z.B. eine vorgegebene Reihenfolge der Auslieferungspositionen der Sendungen auf der Auslieferungsroute) und/oder Sendungsauslieferungsinformationen für die auszuliefernden Sendungen (z.B. Angaben zu den Außenabmessungen und/oder zum Gewicht, und/oder Angabe zu den Auslieferungszeitpunkten und/oder Auslieferungszeiträumen) und/oder Verkehrsinformationen (z.B. Angaben zu Verkehrsverzögerungen wie Staus und/oder Unfällen und/oder Baustellen und/oder Sperrungen) bei dem Bestimmen der möglichen Auslieferungsroute berücksichtigt werden. Das Bestimmen der Auslieferungsroute (z.B. der Vielzahl von möglichen Auslieferungsrouten) kann zumindest teilweise basierend auf durch die Routenplanungskomponente bereitgehaltenen Navigationskarteninformationen erfolgen.

Die wissensbasierte und selbstlernende Fahrzeugkonfigurationskomponente 302 ist beispielsweise eingerichtet zum Bestimmen einer möglichen Fahrzeugkonfiguration. Zum Beispiel ist die wissensbasierte und selbstlernende Fahrzeugkonfigurationskomponente 302 eingerichtet, den oben im Zusammenhang mit Fig. 1b offenbarten Schritt 1032 auszuführen. Die wissensbasierte und selbstlernende Fahrzeugkonfigurationskomponente 302 kann ferner auch zum Bestimmen des erwarteten Energiebedarfs dienen. Zum Beispiel kann sie eingerichtet sein, den oben im Zusammenhang mit Fig. 1b offenbarten Schritt 1033 auszuführen.

Die wissensbasierte und selbstlernende Fahrzeugkonfigurationskomponente 302 umfasst ein Ein-und/oder Ausgabemodul 3021, ein Abfragemodul 3022, eine Wissensdatenbank 3023, ein Trainingsmodul 3024 und ein Datensammelmodul 3025. Die Wissensdatenbank 3023 speichert beispielsweise historische Auslieferungsinformationen, die von den Fahrzeugen erfasst und/oder bestimmt und durch das Datensammelmodul 3025 erhalten wurden. Das Trainingsmodul 3024 dient beispielsweise zum Trainieren der Wissensdatenbank 3025, indem es die durch das Datensammelmodul 3025 erhaltenen historischen Auslieferungsinformationen derart filtert, dass in der Wissensdatenbank 3023 nur relevante historische Auslieferungsinformationen gespeichert werden. Wenn kontinuierlich historische Auslieferungsinformationen an dem Datensammelmodul 3025 erhalten werden, kann die Wissensdatenbank 3023 kontinuierlich durch das Trainingsmodul 3024 trainiert werden. Zum Beispiel kann das Training derart erfolgen, dass basierend auf der Wissensdatenbank 3023 für eine bestimmte Auslieferungsroute eine Fahrzeugkonfiguration für ein Fahrzeug derart bestimmt werden kann, dass erwartet wird, dass ein Fahrzeug mit dieser Fahrzeugkonfiguration sich entlang dieser Auslieferungsroute möglichst energieeffizient bewegt und/oder dass der erwartete Energiebedarf für die Auslieferung der Sendungen entlang dieser Auslieferungsroute durch ein Fahrzeug mit dieser Fahrzeugkonfiguration möglichst gering ist. Das Trainingsmodul 3024 kann beispielsweise auf einem Algorithmus zum maschinellen Lernen basieren. Das maschinelle Lernen kann beispielsweise in Form eines überwachten maschinellen Lernens (engl. supervised machine learning), eines unüberwachten maschinellen Lernens (engl. unsupervised machine learning) und/oder eines bestärkenden maschinellen Lernens (engl. reinforcement machine learning) erfolgen. Vorzugsweise erfolgt das maschinelle Lernen durch eine Kombination mehrerer dieser Techniken.

Neben den historischen Auslieferungsinformationen können in der Wissensdatenbank auch weitere Informationen wie beispielsweise Umweltinformationen (z.B. Wetterinformationen und/oder Verkehrsinformationen) gespeichert werden.

Über das Ein- und/oder Ausgabemodul 3021 kann die Fahrzeugkonfigurationskomponente 302 Informationen empfangen und/oder senden. Zum Beispiel dient das Ein- und/oder Ausgabemodul 3021 zum Austausch von Informationen mit der Routenplanungskomponente 301 und/oder der Routenplanungskomponente 303. Dabei können beispielsweise Informationen ausgetauscht werden, die eine von der Routenplanungskomponente 301 bestimmte mögliche Auslieferungsroute und/oder eine von der Fahrzeugkonfigurationskomponente 302 bestimmte mögliche Fahrzeugkonfiguration und/oder einen von der Simulationskomponente 303 bestimmten erwarteten Energiebedarf repräsentieren.

Das Bestimmen einer möglichen Fahrzeugkonfiguration kann beispielsweise durch eine entsprechende Abfrage der Wissensdatenbank 3023 erfolgen. Zum Abfragen der Wissensdatenbank 3023 dient beispielsweise das Abfragemodul 3022. Das Abfragen der Wissensdatenbank 3023 basiert beispielsweise zumindest teilweise auf von der Routenplanungskomponente 301 empfangen Informationen, die eine von der Routenplanungskomponente 301 bestimmte mögliche Auslieferungsroute repräsentieren, so dass als Ergebnis des Abfragens eine mögliche Fahrzeugkonfiguration für ein Fahrzeug erhalten wird, für die erwartet wird, dass ein Fahrzeug mit dieser Fahrzeugkonfiguration sich entlang dieser Auslieferungsroute möglichst energieeffizient bewegt und/oder dass der erwartete Energiebedarf für die Auslieferung der Sendungen entlang dieser Auslieferungsroute durch ein Fahrzeug mit dieser Fahrzeugkonfiguration möglichst gering ist.

Neben der Fahrzeugkonfiguration können als Ergebnis der Abfrage der Wissensdatenbank auch weitere beispielsweise für eine Simulation der Auslieferung der Sendungen entlang der bestimmten möglichen Auslieferungsroute durch ein Fahrzeug mit der bestimmten möglichen Fahrzeugkonfiguration relevante Informationen wie Umweltinformationen (z.B. Wetterinformationen und/oder Umweltinformationen) erhalten werden.

Die Simulationskomponente 303 ist beispielsweise eingerichtet zum Bestimmen eines erwarteten Energiebedarfs. Zum Beispiel ist die Simulationskomponente 303 eingerichtet, den oben im Zusammenhang mit Fig. 1b offenbarten Schritt 1033 auszuführen. Zum Beispiel kann die Simulationskomponente eine virtuelle Simulation der Auslieferung der Sendungen entlang der bestimmten möglichen Auslieferungsroute durch ein Fahrzeug mit der bestimmten möglichen Fahrzeugkonfiguration durchführen, um den für die Auslieferung erwarteten Energiebedarf zu bestimmen. Zu diesem Zweck empfängt die Simulationskomponente beispielsweise Informationen, die die von der Routenplanungskomponente 301 bestimmte mögliche Auslieferungsroute und/oder die von der Fahrzeugkonfigurationskomponente 302 bestimmte mögliche Fahrzeugkonfiguration repräsentieren. Es versteht sich, dass bei der Simulation noch weitere Informationen wie beispielsweise Verkehrsinformationen und/oder Umweltinformationen berücksichtigt werden können. Als Ergebnis der Simulation wird beispielsweise der erwartete Energiebedarf erhalten. Es versteht sich, dass dieser erwartete Energiebedarf von dem tatsächlichen Energiebedarf abweichen kann. Nichtsdestotrotz wird durch die Simulation basierend auf der Auslieferungsroute und der Fahrzeugkonfiguration eine besonders gute Annäherung des erwarteten Energiebedarfs an den tatsächlichen Energiebedarf erreicht. Diese kann durch die Berücksichtigung von weiteren Informationen noch erhöht werden.

Anschließend kann die Simulationskomponente 302 beispielsweise bestimmen, ob eine vorgegebene Energiebedarfsbedingung erfüllt ist, (vgl. Schritt 1034) und entscheiden, ob die bestimmte mögliche Auslieferungsroute und die bestimmte Fahrzeugkonfiguration als Auslieferungsroute und als Fahrzeugkonfiguration für die Auslieferung der Sendungen bestimmt werden sollen (vgl. Schritt 1035).

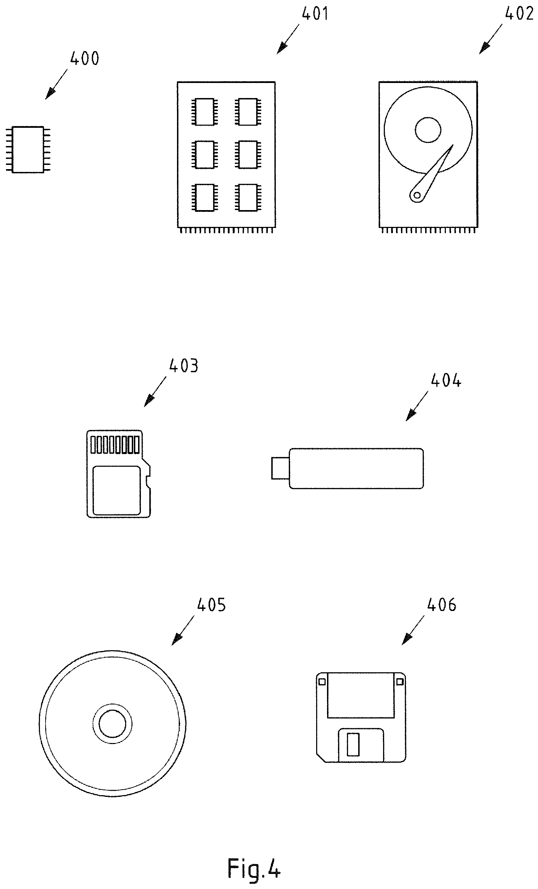

Fig. 4 zeigt schließlich beispielhafte Ausführungsformen von Speichermedien, auf denen ein Ausführungsbeispiel eines offenbarten Computerprogramms gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessors 201 der Vorrichtung 200 aus Fig. 2) sein, beispielsweise ein (nicht-flüchtiger oder flüchtiger) Programmspeicher des Prozessors oder ein Teil davon (z.B. Programmspeicher 202). Ausführungsbeispiele eines Speichermediums sind ein Flash-Speicher 400, eine SSD-Festplatte 401, eine magnetische Festplatte 402, eine Speicherkarte 403, ein Memory Stick 404 (z.B. ein USB-Stick), eine CD-ROM oder DVD 405 oder eine Diskette 406.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren ausgeführt durch eine Vorrichtung oder ein System, wobei das Verfahren umfasst:
- Erhalten und/oder Bereithalten (101) von historischen Auslieferungsinformationen, wobei die historischen Auslieferungsinformationen mit mehreren durch ein oder verschiedene Fahrzeuge ausgeführten Auslieferungen von Sendungen assoziiert sind, und wobei die historischen Auslieferungsinformationen für jede der mit den Auslieferungsinformationen assoziierten Auslieferungen von Sendungen zumindest Angaben zu einer Auslieferungsroute, zu einem Energiebedarf und zu einer Fahrzeugkonfiguration repräsentieren,
- Erhalten (102) von Sendungsauslieferungsinformationen für mehrere auszuliefernde Sendungen, wobei die Sendungsauslieferungsinformationen zumindest für jede der Sendungen eine Angabe zur Auslieferungsposition für die Auslieferung der jeweiligen Sendung repräsentieren,
- Bestimmen (103) einer Auslieferungsroute zum Ausliefern der Sendungen und einer Fahrzeugkonfiguration für ein Fahrzeug zum Ausliefern der Sendungen entlang der bestimmten Auslieferungsroute zumindest teilweise basierend auf den Sendungsauslieferungsinformationen und den historischen Auslieferungsinformationen, wobei das Bestimmen der Auslieferungsroute und der Fahrzeugkonfiguration das Bestimmen des erwarteten Energiebedarfs für die Auslieferung der Sendungen entlang der bestimmten Auslieferungsroute durch ein Fahrzeug mit der bestimmten Fahrzeugkonfiguration umfasst,
- Bereitstellen (104) von Auslieferungssteuerinformationen, um ein Ausliefern der Sendungen entlang der bestimmten Auslieferungsroute durch ein Fahrzeug mit der bestimmten Fahrzeugkonfiguration zu veranlassen.

2. Verfahren gemäß Anspruch 1, wobei das Bestimmen der Auslieferungsroute und der Fahrzeugkonfiguration umfasst:
- Bestimmen (1031) einer möglichen Auslieferungsroute zum Ausliefern der Sendungen,
- Bestimmen (1032) einer möglichen Fahrzeugkonfiguration eines Fahrzeugs zum Ausliefern der Sendungen entlang der möglichen Auslieferungsroute,
- Bestimmen (1033) des erwarteten Energiebedarfs für die Auslieferung der Sendungen entlang der möglichen Auslieferungsroute durch ein Fahrzeug mit der möglichen Fahrzeugkonfiguration.

3. Verfahren gemäß Anspruch 2, wobei das Bestimmen der Auslieferungsroute und der Fahrzeugkonfiguration umfasst:
- Bestimmen (1034), ob der erwartete Energiebedarf für die Auslieferung der Sendungen entlang der möglichen Auslieferungsroute durch ein Fahrzeug mit der möglichen Fahrzeugkonfiguration eine vorgegebenen Energiebedarfsbedingung erfüllt, und wobei die mögliche Auslieferungsroute nur dann als Auslieferungsroute zum Ausliefern der Sendungen und die mögliche Fahrzeugkonfiguration nur dann als Fahrzeugkonfiguration für ein Fahrzeug zum Ausliefern der Sendungen entlang der Auslieferungsroute bestimmt werden, wenn bestimmt wird, dass die vorgegebene Energiebedarfsbedingung erfüllt ist.

4. Verfahren gemäß Anspruch 3, wobei, wenn bestimmt wird, dass die vorgegebene Energiebedarfsbedingung nicht erfüllt ist, das Bestimmen der Auslieferungsroute und der Fahrzeugkonfiguration umfasst:
- Bestimmen (1031) zumindest einer weiteren möglichen Auslieferungsroute zum Ausliefern der Sendungen,
- Bestimmen (1032) einer weiteren möglichen Fahrzeugkonfiguration eines Fahrzeugs zum Ausliefern der Sendungen entlang der weiteren Auslieferungsroute,
- Bestimmen (1033) des erwarteten Energiebedarfs für die Auslieferung der Sendungen entlang der weiteren möglichen Auslieferungsroute durch ein Fahrzeug mit der weiteren möglichen Fahrzeugkonfiguration,
- Bestimmen (1034), ob der erwartete Energiebedarf für die Auslieferung der Sendungen entlang der weiteren möglichen Auslieferungsroute durch ein Fahrzeug mit der weiteren möglichen Fahrzeugkonfiguration die vorgegebene Energiebedarfsbedingung erfüllt.

5. Verfahren gemäß einem der Ansprüche 1 bis 4, wobei das das Bestimmen der Auslieferungsroute und der Fahrzeugkonfiguration umfasst:
- Auswählen der bestimmten Auslieferungsroute aus einer Vielzahl von möglichen Auslieferungsrouten zum Ausliefern der Sendungen und/oder der bestimmten Fahrzeugkonfiguration aus einer Vielzahl von möglichen Fahrzeugkonfigurationen für ein Fahrzeug zum Ausliefern der Sendungen entlang der Auslieferungsroute.

6. Verfahren gemäß Anspruch 5, wobei für jede der möglichen Auslieferungsrouten und/oder jede der möglichen Fahrzeugkonfigurationen der erwartete Energiebedarf für die Auslieferung der Sendungen entlang der jeweiligen möglichen Auslieferungsroute durch ein Fahrzeug mit der jeweiligen möglichen Fahrzeugkonfiguration bestimmt wird, und wobei die Auslieferungsroute der möglichen Auslieferungsrouten und/oder die Fahrzeugkonfiguration der möglichen Fahrzeugkonfigurationen mit dem geringsten erwarteten Energiebedarf für die Auslieferung der Sendungen ausgewählt wird.

7. Verfahren gemäß einem der Ansprüche 1 bis 6, wobei das Bestimmen der Auslieferungsroute und der Fahrzeugkonfiguration zumindest teilweise gemäß einem evolutionären Algorithmus und/oder einem Algorithmus zum maschinellen Lernen erfolgt.

8. Verfahren gemäß einem der Ansprüche 1 bis 7, wobei die historischen Auslieferungsinformationen für jede der mit den Auslieferungsinformationen assoziierten Auslieferungen von Sendungen ferner zumindest eine oder mehrere der folgenden Angaben repräsentieren:
- eine Angabe zu einer Fahrzeuggeschwindigkeit und/oder Fahrzeugbeschleunigung auf der Auslieferungsroute und/oder auf einem Abschnitt der Auslieferungsroute der mit der jeweiligen Auslieferungsinformation assoziierten Auslieferung von Sendungen,
- eine Angabe zur Beschaffenheit der Auslieferungsroute und/oder eines Abschnitts der Auslieferungsroute der mit der jeweiligen Auslieferungsinformation assoziierten Auslieferung von Sendungen, und/oder
- eine Angabe zum Zeitverlauf der mit der jeweiligen Auslieferungsinformation assoziierten Auslieferung von Sendungen.

9. Verfahren gemäß einem der Ansprüche 1 bis 7, wobei die Sendungsauslieferungsinformationen für jede der Sendungen ferner zumindest eine oder mehrere der folgenden Angaben repräsentieren:
- eine Angabe zu Außenabmessungen der jeweiligen Sendung,
- eine Angabe zu einem Gewicht der jeweiligen Sendung,
- eine Angabe zu einem Auslieferungszeitpunkt und/oder zu einem Auslieferungszeitraum für die Auslieferung der jeweiligen Sendung,
- eine Angabe zu einer Beschaffenheit der Auslieferungsposition für die Auslieferung der jeweiligen Sendung, und/oder
- eine Angabe zu einem Empfängername und/oder zu einer Empfängeranschrift der jeweiligen Sendung.

10. Verfahren gemäß einem der Ansprüche 1 bis 9, wobei das Verfahren ferner umfasst:
- Erhalten und/oder Bereithalten von mit der Auslieferung der Sendungen assoziierten Umweltinformationen, wobei das Bestimmen der Auslieferungsroute und/oder der Fahrzeugkonfiguration und/oder des erwarteten Energiebedarfs ferner zumindest teilweise auf den Umweltinformationen basiert.

11. Verfahren gemäß Anspruch 10, wobei die Umweltinformationen zumindest eine Angabe zum erwarteten Wetter und/oder zum erwarteten Sonnenstand an zumindest einer Auslieferungsposition der Auslieferungspositionen repräsentierende Wetterinformation umfasst.

12. Verfahren gemäß einem der Ansprüche 1 bis 11, wobei das Verfahren ferner umfasst:
- Erhalten von mit der Auslieferung der Sendung assoziierten historischen Auslieferungsinformationen, wenn das Fahrzeug mit der bestimmten Fahrzeugkonfiguration die Sendungen entlang der bestimmten Auslieferungsroute ausgeliefert hat, wobei die Auslieferungsinformationen zumindest Angaben zu der bestimmten Auslieferungsroute, zu dem Energiebedarf und zu der bestimmten Fahrzeugkonfiguration repräsentieren.

13. Computerprogramm umfassend Programmanweisungen, die dazu ausgebildet sind, bei Ausführung durch mindestens einen Prozessor eine Vorrichtung oder ein System zu veranlassen, das Verfahren gemäß einem der Ansprüche 1 bis 12 auszuführen.

14. Vorrichtung (200) oder System (300) umfassend:
- Mittel (201-205; 301-303) eingerichtet zur Ausführung des Verfahrens nach einem der Ansprüche 1 bis 12 oder umfassend jeweilige Mittel (201-205; 301-303) zur Ausführung der Schritte des Verfahrens nach einem der Ansprüche 1 bis 12.
